# EUROPEAN PATENT SPECIFICATION

(11) **EP 3 258 532 B1**
(45) Date of publication and mention of the grant of the patent: **16.12.2020**
(21) Application number: 16748587.9
(22) Date of filing: 26.01.2016
(51) Int. Cl.: H01M 10/056, H01M 10/054, H01M 10/0565

(54) **ALL-SOLID-STATE POLYMER ELECTROLYTE, AND PREPARATION AND APPLICATION THEREOF**
FESTKÖRPERPOLYMERELEKTROLYT SOWIE HERSTELLUNG UND ANWENDUNG DAVON
ÉLECTROLYTE POLYMÈRE À L'ÉTAT TOUT SOLIDE, ET PRÉPARATION ET APPLICATION ASSOCIÉES

(30) Priority: 13.02.2015 CN 201510076973; 13.02.2015 CN 201510078309
(43) Date of publication of application: 20.12.2017
(73) Proprietor: Qingdao Institute of Bioenergy and Bioprocess Technology, Chinese Academy of Sciences, Qingdao, Shandong 266101 (CN)
(72) Inventor: CUI, Guanglei, Qingdao Shandong 266101 (CN); ZHANG, Jianjun, Qingdao Shandong 266101 (CN); ZHAO, Jianghui, Qingdao Shandong 266101 (CN); CHAI, Jingchao, Qingdao Shandong 266101 (CN); YUE, Liping, Qingdao Shandong 266101 (CN); LIU, Zhihong, Qingdao Shandong 266101 (CN); WANG, Xiaogang, Qingdao Shandong 266101 (CN); XU, Hongxia, Qingdao Shandong 266101 (CN)
(74) Representative: Mewburn Ellis LLP
(86) International application number: PCT/CN2016/072104
(87) International publication number: WO 2016/127786

(56) References cited:
- EP-A1- 2 784 868
- CN-A- 103 421 190
- CN-A- 103 500 845
- CN-A- 104 183 867
- KR-A- 20050 024 921
- US-B2- 7 226 702

## Description

### Technical Field

The present invention relates to battery technologies, and specifically to an all-solid-state polymer electrolyte, and preparation and application thereof.

### Background

In the energy storage industry, lithium-ion batteries have made rapid development in the past two decades. However, limited lithium resources will become one of the factors which hinder the development of lithium-ion batteries. Sodium batteries (including sodium-ion batteries) becomes a research hotspot because of abundant sodium elements. Compared with the lithium-ion battery, a sodium-ion battery refers to a device of which sodium ions can be transmitted between battery electrodes and intercalated/de-intercalated to implement charging and discharging process. Sodium vanadium phosphate, sodium iron phosphate, sodium ion fluorophosphate, sodium vanadium fluorophosphate, sodium iron fluorophosphate, sodium manganese oxide or sodium cobalt oxide is often used as a positive electrode material of the sodium battery; and metallic sodium, hard carbon, sodium titanium oxide, nickel cobalt oxide, antimony oxide, antimony carbon composite material, tin antimony composite material, para-phthalic sodium, lithium titanium oxide, sodium lithium titanium oxide or the like is often used as a negative electrode material of the sodium battery, and the electrolyte is mainly liquid electrolyte.

So far, the sodium salt used by sodium battery includes: sodium hexafluorophosphate, sodium perchlorate, sodium bis(oxalate) borate, sodium difluoro (oxalato) borate or sodium trifluoromethanesulfonate, the carbonate solvent used by the liquid sodium battery, for example, propylene carbonate, ethylene carbonate, dimethyl carbonate, diethyl carbonate, ethyl methyl carbonate and mixed solvent thereof. However, the liquid electrolyte is volatile, and is easily decomposed in the working process of the sodium battery to produce gas, thereby easily causing combustion and explosion of the sodium battery. Moreover, a liquid electrolyte battery has certain requirements for a shell. By solving the electrolyte problem of the sodium battery, not only the security problem of the sodium battery can be solved, but also sodium-ion batteries can be made to replace lithium batteries to be widely used.

CN103715449A discloses a sodium-ion battery system. The negative electrode active material is an active material with Na₂Ti₆O₁₃ crystalline phases. The negative electrode active material layer contains a carbon material as a conductive material. The charging control part controls the potential of the negative electrode active material to be higher than the potential for irreversibly inserting Na⁺ into the carbon material. CN103985851A discloses a positive electrode material of a sodium-ion battery and a sodium-ion battery comprising the positive electrode material. The positive electrode material of a sodium-ion battery includes a conductive additive and Na₃₋ₓM₂LO₆, where 0≤x<2; M is one or more of Fe, Co, Ni, Cu, Zn, Mg, V and Cr; and L is one or more of Sb, Te, Nb, Bi and P. The positive electrode material has the advantages of high sodium storage capacity, good stability and high rate performance, and has high energy density and power density; the assembled sodium-ion battery has superior cycling stability, is non-polluting and clean, is safe and environmentally-friendly, is low in cost, and is a superior electrochemical energy storage system; and the positive electrode material is easy to prepare, and the raw material thereof is cheap and is easy to get. CN103123981A invention discloses a non-aqueous organic electrolyte containing sodium bis(fluorosulfonyl)imide, including an electrolyte salt and an organic solvent, wherein the electrolyte salt is sodium bis(fluorosulfonyl)imide.

The above patents make relevant reports on the negative electrode material, the positive electrode material and the liquid electrolyte of the sodium-ion battery. However, there are only a few patents about solid-state polymer sodium batteries with more superior safety performance. The widely-used polymer electrolyte matrix of the lithium-ion battery is mainly polyethylene oxide, polyvinylidene fluoride, polymethylmethacrylate and polyacrylonitrile. However, they are very difficult to be used widely in sodium batteries due to their low ionic conductivity, low discharge specific capacity and the like.

In addition, a large-scale energy storage system has become an important part of the future smart grid. Developing high-efficient energy storage technologies has significant social and economic benefits for improving the utilization efficiency and power quality of the existing power generation system and promoting the wide application of renewable energy sources. One of the most promising industrialization of the energy storage technologies is the electrochemical energy storage technology. The lithium battery is considered as one of the most competitive electrochemical energy storage technologies due to its light weight, high specific energy/specific power, long service life and the like. Meanwhile, it has been more and more widely in the energy storage. The lithium-ion battery is mainly composed of five parts: a positive electrode, a negative electrode, an electrolyte, a membrane, and a shell and electrode tab. The electrolyte is one of the critical parts of the battery, and the performance thereof directly affects performance optimization and improvement of the lithium-ion battery. An electrolyte with excellent performance should possess three necessary conditions: (1) high ionic conductivity; (2) superior electrochemical stability, i.e. having good interfacial compatibility with an electrode material and good stability; and (3) excellent heat-resistant performance. The study shows that the composition, stoichiometric proportions and structure of the electrolyte determine the performance of the electrolyte, thereby finally affecting the performance of the lithium-ion battery. Thus, high-performance electrolyte plays a vital role in improving the overall performance of the battery.

The electrolyte of current electrochemical energy storage lithium-ion battery contains liquid organic solvent, a lithium salt and a polyolefin separator. While in use, the electrolyte is easy to leak and volatilize, thereby causing a "dry zone" phenomenon of the battery, and then limiting and affecting the performance of the battery and shortening the service life thereof. Meanwhile, the polyolefin separator possesses poor thermal stability, the battery is short-circuited since the separator is contracted or melted because of being affected by the heat or in extreme case, thereby occurring explosion. The all-solid-state lithium battery using the solid electrolyte to replace the organic liquid electrolyte hopefully solves the problem of safety of the battery thoroughly while solving the two key problems of relatively low energy density and relatively low service life of the traditional lithium-ion battery, thereby conforming to the development direction of future large-capacity novel chemical energy storage technologies. Compared with liquid electrolyte, the battery using all-solid-state polymer electrolyte dispalyed the following advantages: the all-solid-state polymer electrolyte can suppress the growth of lithium dendrite; the safety is also improved because of no liquid leakage; and the shape adaptability of the battery is enhanced, thereby adapting to the personalized development of future batteries, and integral manufacturing of batteries is conducted by coating process, laminating process and the like.

All-solid-state lithium secondary batteries on which research is conducted mainly include two types: one type refers to the lithium-ion batteries composed of organic polymer electrolytes, also called all-solid-state polymer lithium batteries; and the other type refers to lithium-ion batteries composed of inorganic solid electrolytes, also called all-solid-state inorganic lithium batteries. As to polymer electrolyte, polymer matrix mainly include polyethylene oxide, polyvinylidene fluoride, polyacrylonitrile, polymethylmethacrylate and polyvinylidene chloride. An example of the disclosed polymer electrolyte is as follows: US 4792504 describes a polymer electrolyte, which contains poly dimethyl acrylic ethylene glycol/polyethylene oxide, but it exhibits relatively low mechanical performance. CN200710144760 describes an polyethylene oxide electrolyte with ultrafine powder filler , which has good mechanical performance but relatively low ionic conductivity. CN1411475 describes a polymer electrolyte containing an amphiphilic grafted copolymer. CN 1428363A describes a nanoporous polymer electrolyte membrane, which has superior charge/discharge performance and cycle performance. These two membranes have relatively good properties, but both are gel polymer electrolytes thereof.

Polyethylene oxide (PEO)/lithium salt-type electrolytes have been applied to all-solid-state polymer lithium batteries, but from a practical point of view, there still some problems exist to be solved urgently: linear and grafted polymers have relatively poor mechanical performance so that self-supported polymer films are not easy to be prepared, while the ionic conductivity of a network polymer is relatively low. Therefore, such electrolyte system is only suitable for operating under the condition of high temperature or micro-current, and is difficult to be practically applied into a lithium battery operating at ambient temperature

US7226702 discloses a lithium battery comprising a polysiloxane electrolyte wherein the porous support of the electrolyte is a polycarbonate microporous membrane.

### Summary of the Invention

The purpose of the present invention is to provide an all-solid-state polymer electrolyte, and preparation and application thereof

A polymer electrolyte and batteries comprising it as well as manufacturing methods and use according to the invention are defined in the appended claims.

To achieve the above purpose, the present invention adopts the following technical solution:
An all-solid-state polymer electrolyte. The electrolyte comprises a carbonic ester polymer, a metal salt and a porous support material; wherein the thickness is 20-800 µm; the ion electrical conductivity is 2×10⁻⁵ S/cm - 1×10⁻³ S/cm; the electrochemical window is higher than 3.6V; and the metal salt is a sodium salt or a lithium salt.

A sodium battery electrolyte. The electrolyte comprises a carbonic ester polymer, a sodium salt and a porous support material; wherein the thickness is 20-600µm; the ion electrical conductivity is 1×10⁻⁵ S/cm - 1×10⁻³ S/cm; and the electrochemical window is higher than 3.6V.

The sodium salt is one or more of sodium hexafluorophosphate, sodium perchlorate, sodium bis(oxalate) borate, sodium difluoro (oxalato) borate and sodium trifluoromethanesulfonate; and the mass fraction of the sodium salt in the electrolyte is 5%-50%; and
the carbonic ester polymer has a structure as shown in general formula 1: 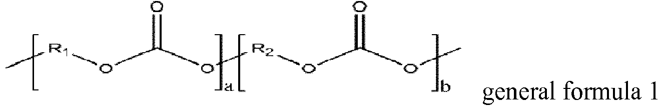 where the value range of a is 1-10000, and the value range of b is 1-10000. R1 is: 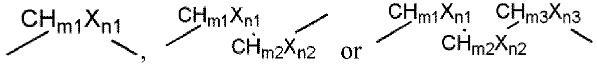 R2 is:

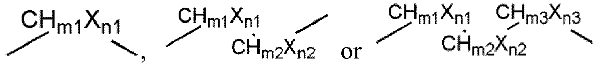

In the above-mentioned substituent group, X is fluorine, phenyl group, hydroxyl group or sodium sulfonate, where the value range of m1 is 0-2, the value range of n1 is 0-2, and m1 and n1 are not both 0; the value range of m2 is 0-2, the value range of n2 is 0-2, and m2 and n2 are not both 0; the value range of m3 is 0-2, the value range of n3 is 0-2, and m3 and n3 are not both 0; and the mass fraction of the carbonic ester polymer in the electrolyte is 5%-90%; and
the porous support material is one or more of a cellulose non-woven film, a glass fiber, a polyethylene terephthalate film (PET film), and a polyimide non-woven film.

The preferred technical solution is as follows:
The carbonic ester polymer is poly propylene carbonate or poly ethylene carbonate; the preferred mass fraction of the carbonic ester polymer in the electrolyte is 40%-90%;
the sodium salt is sodium perchlorate or sodium trifluoromethanesulfonate; the preferred mass fraction of the sodium salt in the electrolyte is 5%-30%; and
the porous support material is a cellulose non-woven film or a glass fiber.

The more preferred technical solution is as follows:
The carbonic ester polymer is poly propylene carbonate; the preferred mass fraction of the carbonic ester polymer in the electrolyte is 60%-80%;
the sodium salt is sodium perchlorate; the preferred mass fraction of the sodium salt in the electrolyte is 15%-30%; and
the porous support material is a cellulose non-woven film.

A preparation method of the sodium battery electrolyte, comprising:
(1) Fetching the carbonic ester polymer and dissolving same in solvent and stirring;
(2) Dissolving the sodium salt in the solution, and then sealing and stirring until a homogeneous solution is formed; and
(3) Uniformly pouring the solution on the porous support material, and obtaining a solid-state electrolyte of the sodium battery by drying in an environment of 60-80 °C.

The solvent is N,N-dimethylformamide, N,N-dimethylacetamide, acetone, acetonitrile, propylene carbonate, ethylene carbonate, dimethyl carbonate, diethyl carbonate, ethyl methyl carbonate, tetrahydrofuran, dimethyl sulfoxide, sulfolane, dimethyl sulfite or diethyl sulfite;
the carbonic ester polymer has a structure as shown in general formula 1: 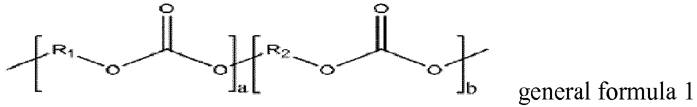 where the value range of a is 1-10000, and the value range of b is 1-10000.
R1 is: 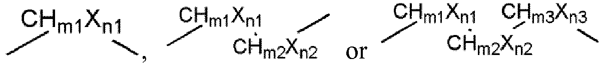 R2 is:

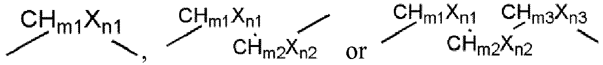

In the above-mentioned substituent group, X is fluorine, phenyl group, hydroxyl group or sodium sulfonate, where the value range of m1 is 0-2, the value range of n1 is 0-2, and m1 and n1 are not both 0; the value range of m2 is 0-2, the value range of n2 is 0-2, and m2 and n2 are not both 0; the value range of m3 is 0-2, the value range of n3 is 0-2, and m3 and n3 are not both 0; the mass fraction of the carbonic ester polymer in the electrolyte is 5%-90%; and
the porous support material is one or more of a cellulose non-woven film, a glass fiber, a polyethylene terephthalate film (PET film) and a polyimide non-woven film.

The preferred technical solution is as follows:
The carbonic ester polymer is poly propylene carbonate or poly ethylene carbonate; the preferred mass fraction of the carbonic ester polymer in the electrolyte is 40%-90%;
the sodium salt is sodium perchlorate or sodium trifluoromethanesulfonate; the preferred mass fraction of the sodium salt in the electrolyte is 5%-30%; and
the porous support material is a cellulose non-woven film or glass fiber.

The more preferred technical solution is as follows:
The carbonic ester polymer is poly propylene carbonate; the preferred mass fraction of the carbonic ester polymer in the electrolyte is 60%-80%;
the sodium salt is sodium perchlorate; the preferred mass fraction of the sodium salt in the electrolyte is 15%-30%; and
the porous support material is a cellulose non-woven film.

An application of the solid-state sodium battery electrolyte, an application of said solid-state sodium battery electrolyte in the preparation of a solid-state sodium battery.

A solid-state sodium battery, comprising a positive electrode, a negative electrode and an electrolyte located between the positive electrode and the negative electrode, and characterized in that the electrolyte is a solid polymer electrolyte; the electrolyte comprises a carbonic ester polymer, a sodium salt and a support material thereof; wherein the thickness is 20-600 µm; the ion electrical conductivity is 1×10⁻⁵ S/cm - 1×10⁻³ S/cm; and the electrochemical window is higher than 3.6V.

Sodium vanadium phosphate, sodium iron sulfate, sodium ion fluorophosphate, sodium vanadium fluorophosphate, sodium iron fluorophosphate, sodium manganese oxide or sodium cobalt oxide is used as the positive electrode active material.

Metallic sodium, hard carbon, molybdenum disulfide, sodium titanium oxide, nickel cobalt oxide, antimony oxide, antimony carbon composite material, tin antimony composite material, para-phthalic sodium, lithium titanium oxide or sodium lithium titanium oxide is used as the negative electrode active material.

A preparation of the solid-state sodium battery electrolyte, comprising: separating a positive electrode slice from a negative electrode slice by the above-mentioned electrolyte, placing same in a metallic shell, sealing the metallic shell, and obtaining a solid-state sodium battery. The solid-state sodium battery is assembled into a button type or soft package square battery.

A lithium battery electrolyte. The electrolyte includes a carbonic ester polymer, a lithium salt and a porous supporting material; wherein the thickness is 20-800 µm; the mechanical strength is 10-80 MPa; the ionic conductivity is 2×10⁻⁵ S/cm - 1×10⁻³ S/cm at room temperature; and the electrochemical window is higher than 4 V.

The electrolyte further includes an additive.

Wherein the electrolyte suitable for a lithium-sulfur battery has a thickness of 20-500 µm, mechanical strength of 30-80 MPa, ion electrical conductivity of 2×10⁻⁴ S/cm - 1×10⁻³ S/cm at room temperature, and an electrochemical window higher than 4V;
the carbonic ester polymer has a structure as shown in general formula 2: 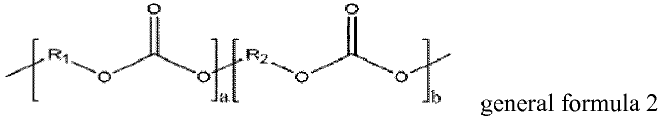 where the value range of a is 1-10000, and the value range of b is 1-10000.
R1 is: 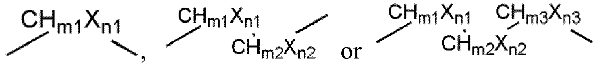 R2 is:

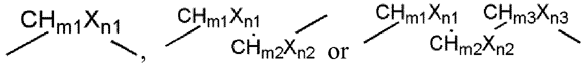

In the above-mentioned substituent group, X is fluorine, phenyl group, hydroxyl group or lithium sulfonate, where the value range of m1 is 0-2, the value range of n1 is 0-2, and m1 and n1 are not both 0; the value range of m2 is 0-2, the value range of n2 is 0-2, and m2 and n2 are not both 0; the value range of m3 is 0-2, the value range of n3 is 0-2, and m3 and n3 are not both 0; the mass fraction of the carbonic ester polymer in the electrolyte is 5 % - 90 %;
the lithium salt is one or more lithium perchlorate, lithium hexafluorophosphate, lithium bis(oxalate) borate, lithium hexafluoroarsenate, lithium tetrafluoroborate, lithium trifluoromethanesulfonate, and lithium bis(fluorosulfonyl)imide; the mass fraction of the lithium salt in the electrolyte is 5 % - 40 %;
the porous support material is one or more of a cellulose non-woven film, a glass fiber, a polyethylene terephthalate film (PET film) and a polyimide non-woven film;
the additive is macromolecule or inorganic particle, wherein the macromolecule is one or more of polyethylene oxide, polyvinylidene fluoride, polyacrylonitrile, polymethylmethacrylate, polyvinyl alcohol and polyvinylidene chloride; and the inorganic particle is one or more of silicon dioxide, titanium dioxide, aluminum oxide, zirconium oxide, nickel oxide, silicon nitride, magnesium hydroxide, diatomite, montmorillonite and kaolin; and the mass fraction of the additive in the polymer electrolyte is 0.5 % - 50 %.

The preferred technical solution is as follows:
The carbonic ester polymer is poly propylene carbonate or poly ethylene carbonate; the adding amount of the carbonic ester polymer in the electrolyte is 40 % - 90 %;
the lithium salt is lithium perchlorate or imidodisulfuryl fluoride lithium salt; the adding amount of the lithium salt in the electrolyte is 5 % - 30 %;
the mass fraction of the additive in the polymer is 0.5 % - 50 %; and
the porous support material is a cellulose non-woven film or glass fiber.

The more preferred technical solution is as follows:
The carbonic ester polymer is poly propylene carbonate; the adding amount of the carbonic ester polymer in the electrolyte is 60 % - 80 %;
the lithium salt is a bistrifluoromethanesulfonimide lithium salt; the adding amount of the lithium salt in the electrolyte 9 % - 30 %;
the additive is silicon dioxide; the mass fraction of the additive in the polymer electrolyte is 0.5 % - 30 %;
the solvent is N,N-Dimethylformamide; and
the porous support material is a cellulose non-woven film.

A preparation method of the lithium battery electrolyte, comprising:
(1) Uniformly mixing a carbonic ester polymer with solvent to obtain a homogeneous carbonic ester polymer solution;
(2) Adding a lithium salt in the homogeneous carbonic ester polymer solution, and continuously stirring the solution after addition to dissolve same completely;
   or adding the lithium salt and additive in the homogeneous carbonic ester polymer solution, and continuously stirring the solution after addition to dissolve same completely; and
(3) Preparing a film on the porous support material using the completely dissolved carbonic ester polymer solution, and obtaining an all-solid-state polymer electrolyte of the lithium battery by vacuum drying.

The carbonic ester polymer has a structure as shown in general formula 2: 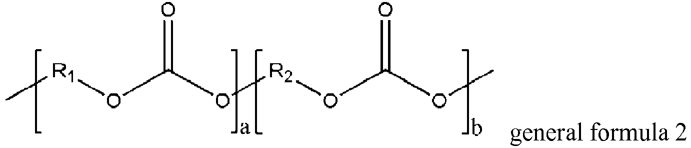 where the value range of a is 1-10000, and the value range of b is 1-10000.
R1 is: 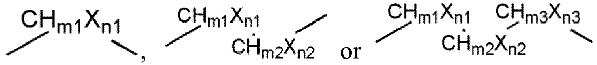 R2 is:

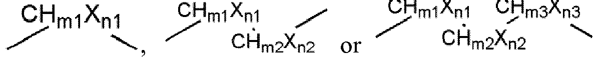

In the above-mentioned substituent group, X is fluorine, phenyl group, hydroxyl group or lithium sulfonate, where the value range of m1 is 0-2, and the value range of n1 is 0-2; the value range of m2 is 0-2, and the value range of n2 is 0-2; the value range of m3, and the value range of n3 is 0-2; the mass fraction of the carbonic ester polymer in the electrolyte is 5 % - 90 %;
the lithium salt is one or more lithium perchlorate, lithium hexafluorophosphate, lithium bis(oxalate) borate, lithium hexafluorophosphate, lithium tetrafluoroborate, lithium trifluoromethanesulfonate, and imidodisulfuryl fluoride lithium slat; the mass fraction of the lithium salt in the electrolyte is 5 % - 40 %;
the porous support material is one or more of a cellulose non-woven film, a glass fiber, a polyethylene terephthalate film (PET film) and a polyimide non-woven film;
the additive is macromolecule or inorganic particle, wherein the macromolecule is one or more of polyethylene oxide, polyvinylidene fluoride, polyacrylonitrile, polymethylmethacrylate, polyvinyl alcohol and polyvinylidene chloride; the inorganic particle is one or more of silicon dioxide, titanium dioxide, aluminium oxide, zirconium oxide, nickel oxide, silicon nitride, magnesium hydroxide, diatomite, montmorillonite and kaolin; and the mass fraction of the additive in the polymer electrolyte is 0.5 % - 50 %.

The solvent is one or more of acetonitrile, dimethyl sulfoxide, sulfolane, dimethyl sulfite, diethyl sulfite, acetone, tetrahydrofuran, trichloromethane, ethyl acetate, N,N-Dimethylformamide and N,N-dimethylacetamide.

The preferred technical solution is as follows:
The carbonic ester polymer is poly propylene carbonate or poly ethylene carbonate; the adding amount of the carbonic ester polymer in the electrolyte is 40 % - 90 %;
the lithium salt is lithium perchlorate or bistrifluoromethanesulfonimide lithium salt; the adding amount of the lithium salt in the electrolyte is 5 % - 30 %;
the additive is silicon dioxide or aluminum oxide; the mass fraction of the additive in the polymer is 0.5 % - 50 %;
the solvent is N,N-Dimethylformamide or acetonitrile; and
the porous support material is a cellulose non-woven film or glass fiber.

The more preferred technical solution is as follows:
The carbonic ester polymer is poly propylene carbonate; the adding amount of the carbonic ester polymer in the electrolyte is 60 % - 80 %;
the lithium salt is a bistrifluoromethanesulfonimide lithium salt; the adding amount of the lithium salt in the electrolyte 9 % - 30 %;
the additive is silicon dioxide; the mass fraction of the additive in the polymer electrolyte is 0.5 % - 30 %;
the solvent is N,N-Dimethylformamide; and
the porous support material is a cellulose non-woven film.

An application of a polycarbonate all-solid-state polymer electrolyte, characterized by an application of the all-solid-state polymer electrolyte in preparation of a solid-state lithium battery; and
further, an application of the all-solid-state polymer electrolyte in preparation of an all-solid-state lithium metal battery, an all-solid-state lithium-ion battery or an all-solid-state lithium-sulfur battery.

An all-solid-state secondary lithium battery, comprising a positive electrode, a negative electrode and an electrolyte located between the positive electrode and the negative electrode, wherein the electrolyte is a polycarbonate all-solid-state polymer electrolyte;
Lithium cobalt oxide, lithium iron phosphate, lithium manganese phosphate, lithium manganate, lithium nickel manganese oxide, ternary material, sulphur, sulphide compound, lithium iron sulfate, lithium ion fluorophosphate, lithium vanadium fluorophosphate, lithium iron fluorophosphate or lithium manganese oxide is used as the positive electrode active material.

Lithium metal, lithium metal alloy, graphite, hard carbon, molybdenum disulfide, lithium titanate, graphene, antimony oxide, antimony carbon composite material, tin antimony composite material or lithium titanium oxide is used as the negative electrode active material,
wherein the positive electrode material suitable for the all-solid-state secondary lithium-sulfur battery is sulphur and sulphide compound, and the negative electrode material is lithium metal and lithium metal alloy.

A preparation of the all-solid-state secondary lithium-sulfur battery, comprising: separating a positive electrode slice from a negative electrode slice by the above-mentioned electrolyte, and obtaining an all-solid-state sodium battery by sealing.

The present invention has the following advantages:
The solid-state sodium battery electrolyte obtained using an amorphous polymeric matrix in the present invention has relatively high ionic conductivity at room temperature, the assembled solid-state sodium battery has better rate capability and superior cycling stability; a body material of the electrolyte is a carbonic ester polymer, thus having cheap prices and low costs; and the solid-state polymer electrolyte material is easy to prepare, specifically including:
1. The prepared sodium battery polymer electrolyte has superior mechanical performance and high ionic conductivity;
2. The positive electrode and the negative electrode are easy to prepare, the material is easy to get, prices are low, the security is good and the environment is friendly;
3. The electrode material can have large-current charging and discharging performance, and can implement quick charging and discharging of the battery.
4. The technical solution of the present invention is simple, is convenient to operate, and is easy to implement large-scale industrialization, thus having high yield and low costs.

In addition, the carbonic ester polymer in the all-solid-state electrolyte of the lithium battery of the present invention is selected from poly propylene carbonate, also called poly (propylene carbonate), which is a fully-degradable environmentally-friendly polymer synthetized by using carbon dioxide which is used as a main gas causing "greenhouse effect" as a raw material. Because of having photo-degradation and biodegradability and also having superior oxygen and water barrier performance, poly propylene carbonate can be used as engineering plastics, biodegradable non-polluting material, disposable pharmaceutical and food packaging material, adhesive and composite material. Compared with polyethylene oxide, poly propylene carbonate is cheaper in price, is good compatible with the lithium salt, has a poly glass transition temperature between 10°C-39.5°C, belongs to an amorphous structure, is easy to move with segment, and has higher ionic conductivity at room temperature than polyethylene oxide, and the poly propylene carbonate-based polymer electrolyte can preferably compatibility with an electrode. Poly propylene carbonate is coated on non-woven fabrics cellulose and other non-woven fabrics support films, thus providing preferable mechanical performance.

And then the electrolyte obtained by the present invention is easy to prepare, is simple in molding, and has mechanical strength of 10 MPa - 80 MPa, ionic conductivity of 2×10⁻⁵ S/cm - 1×10⁻³ S/cm at room temperature, and an electrochemical window higher than 3.6 V. Meanwhile, the solid-state electrolyte effectively suppresses the growth of lithium dendrites, thereby improving the interfacial stability and cycling stability. Moreover, no inflammable and explosive organic solvent is used in the electrolyte of the present invention, thereby eliminating the hidden danger and greatly improving the safe performance of the lithium battery. The electrolyte can be applied to all-solid-state lithium batteries (including lithium-sulfur batteries), all-solid-state lithium ion batteries and other secondary high-energy lithium batteries.

### Description of the Drawings

Figure 1 is the charge/discharge curves of sodium vanadium phosphate/sodium metal half batteryusing poly propylene carbonate all-solid-state polymer electrolyte at room temperature provided in embodiment 1 of the present invention;
Figure 2 is the cycle performance of sodium vanadium phosphate/hard carbon sodium ion full battery using poly-ethyllene-carbonate all-solid-state polymer electrolyte provided in embodiment 3 of the present invention;
Figure 3 is the rate capability of sodium vanadium phosphate/molybdenum disulfide sodium ion full battery using poly-butylene-carbonate all-solid-state polymer electrolyte provided in embodiment 3 of the present invention;
Figure 4 is the charge/discharge curves of lithium battery using poly-propylene-carbonate all-solid-state polymer electrolyte provided in embodiment 5 of the present invention;
Figure 5 is the charge/discharge curves of 5 V lithium battery using poly-ethylene-carbonate all-solid-state polymer electrolyte provided in embodiment 6 of the present invention; and
Figure 6 is the charge/discharge curves of lithium-sulfur battery using poly-butylene-carbonate all-solid-state polymer electrolyte provided in embodiment 7 of the present invention.

### Detailed Description

The preparation method for the electrolyte of the present invention will be further described in detail below in combination with the embodiments. In order to solve the problems that the liquid electrolyte used by the existing electrochemical energy-storage lithium-ion battery system is easy to leak, is corrosive and has hidden danger, or the problems of poor mechanical performance and difficult molding of the gel electrolyte, the present invention provides a polycarbonate all-solid-state polymer electrolyte, to improve the security performance of the existing battery.

### Embodiment 1

### Polymer Electrolyte of sodium battery

Dissolving 1.0 g of poly propylene carbonate and 0.2 g of sodium hexafluorophosphate in 13 g N,N-dimethylformamide, stirring the solution at the room temperature until the solution is in a homogeneous solution state, weighing 3 g of the solution, coating same on a cellulose non-woven film (4 cm × 4 cm), and vacuum-drying the obtained polymer electrolyte at 60 °C; and tailoring according to dimension.

The tested ionic conductivity of the prepared solid-state polymer electrolyte is, including: clamping the electrolyte using two pieces of stainless steel, and placing same in a 2032-type battery case. The sodium ionic conductivity is measured by electrochemical impedance spectroscopy using the formula of σ = L/ARb, where L is the thickness of the electrolyte, A is the area of each stainless steel piece at room temperature, and Rb is impedance obtained by measurement. The ionic conductivity of solid-state polymer electrolyte is 4×10⁻⁴ S/cm at 25 °C.

The electrochemical window of the prepared solid-state polymer electrolyte is tested, including: clamping the electrolyte using two pieces of stainless steel, and placing same in a 2032-type battery case. The electrochemical window conducts linear volt-ampere scanning measurement with an electrochemical workstation, has onset potential of 2.5 V, the maximum potential of 5.5 V, and scanning speed of 1 mV/s. The electrochemical window of the solid-state polymer electrolyte is higher than 4.5 V.

Measurement of discharge specific capacity of the polymer electrolyte in the sodium battery;

### (1) Preparation of Positive Electrode

A. Dissolving polyvinylidene fluoride (PVdF) in N,N-2-methyl pyrrolidone with the concentration of 0.1mol/L; B. Mixing PVdF, sodium vanadium phosphate and conductive carbon black with the mass ratio of 10:80:10, and then grinding same for at least 1 hour; C. uniformly coating the slurry obtained in the previous step on a aluminum foil with the thickness of 100 µm -120 µm; and D. tailoring according to dimension.

### (2) Preparation of Negative Electrode

### Sodium as Negative Electrode

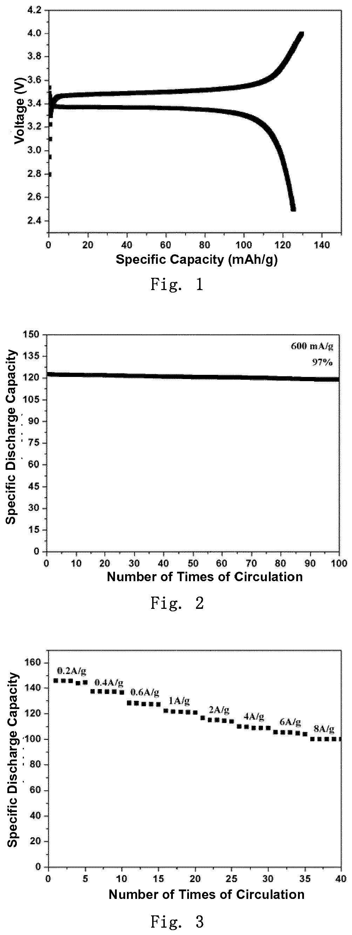

Assembling the polymer electrolyte into a sodium battery by taking the sodium metal as a negative electrode and sodium vanadium phosphate as a positive electrode, and measuring charge/discharge curves of the embodiment at room temperature using an LAND battery charge & discharge instrument, as shown in Figure 1. It was demonstrated that the discharge specific capacity of the solid-state sodium battery using solid-state polymer electrolyte is 106 mAh g⁻¹.

### Embodiment 2:

### Polymer Electrolyte of sodium battery

Dissolving 1.5 g of poly ethylene carbonate and 0.3 g of sodium trifluoromethanesulfonate in 18 g of acetonitrile, stirring the solution at the room temperature until the solution is in a homogeneous solution state, weighing 5 g of the solution, coating same on the polyethylene terephthalate non-woven fabrics (5 cm × 5 cm), and vacuum-drying the obtained polymer electrolyte at 80 °C; and tailoring according to dimension.

Testing the ionic conductivity of the prepared solid-state polymer electrolyte: clamping the electrolyte using two pieces of stainless steel, and placing same in a 2032-type battery case. The sodium ionic conductivity is measured by electrochemical impedance spectroscopy using the formula of σ=L/ARb, where L is the thickness of the electrolyte, A is the area of each stainless steel piece at room temperature, and Rb is impedance obtained by measurement. The ionic conductivity of the solid-state polymer electrolyte is 8×10⁻⁴ S/cm at 25 °C.

Testing the electrochemical window of the prepared solid-state polymer electrolyte: clamping the electrolyte using two pieces of stainless steel, and placing same in a 2032-type battery case. The electrochemical window conducts linear volt-ampere scanning measurement, has onset potential of 2.5 V, the maximum potential of 5.5 V, and scanning speed of 1 mV/s. The electrochemical window of the solid-state polymer electrolyte is higher than 4V.

Measurement of cycle performance of the polymer electrolyte in the sodium battery:

### (1) Preparation of Positive Electrode

A. Dissolving polyvinylidene fluoride (PVdF) in N,N-2-methyl pyrrolidone with the concentration of 0.1 mol/L; B. Mixing PVdF, sodium iron sulfate and conductive carbon black with the mass ratio of 10:80:10, and then grinding same for at least one hour; C. uniformly coating the slurry obtained in the previous step on a aluminum foil with the thickness of 100-120 µm; D. tailoring according to dimension.

### (2) Preparation of Negative Electrode

A. Dissolving polyvinylidene fluoride (PVdF) in N,N-2-methyl pyrrolidone with the concentration of 0.1mol/L; B. Mixing PVdF, hard carbon and conductive carbon black with the mass ratio of 10:80:10, and then grinding same for at least 1 hour; C. uniformly coating the slurry obtained in the previous step on a copper foil with the thickness of 100 µm -120 µm; D. tailoring according to dimension.

Assembling the polymer electrolyte into a sodium battery by taking hard carbon as a negative electrode and sodium iron sulfate as a positive electrode, and measuring the embodiment by using an LAND battery charging and discharging instrument, as shown in Figure 2. It was demonstrated that capacity retention of the solid-state sodium ion full battery using this solid-state polymer electrolyte is 97 % after 100 cycles under the current of 600 mA/g.

### Embodiment 3

### Polymer Electrolyte of sodium battery

Dissolving 2 g of polytetramcthylene carbonate and 0.4 g of sodium perchlorate in 20 g of tetrahydrofuran, stirring the solution at the room temperature until the solution is in a homogeneous solution state, weighing 6 g of the solution, coating same on a glass fiber non-woven film (6 cm × 6 cm), and vacuum-drying the obtained polymer electrolyte at 70 °C; and tailoring according to dimension.

Testing the ionic conductivity of the prepared solid-state polymer electrolyte: clamping the electrolyte using two pieces of stainless steel, and placing same in a 2032-type battery case. The sodium ionic conductivity is measured by electrochemical impedance spectroscopy using the formula of σ=L/ARb, where L is the thickness of the electrolyte, A is the area of each stainless steel piece at room temperature, and Rb is impedance obtained by measurement. It was demonstrated that the ionic conductivity of the solid-state polymer electrolyte is 6×10⁻⁴ S/cm at 25 °C.

Testing the electrochemical window of the prepared solid-state polymer electrolyte: clamping the electrolyte using two pieces of stainless steel, and placing same in a 2032-type battery case. The electrochemical window conducts linear volt-ampere scanning measurement with an electrochemical workstation, has onset potential of 2.5 V, the maximum potential of 5.5 V, and scanning speed of 1mV/s. It was demonstrated that the electrochemical window is higher than 4.9V.

### Measurement of rate capability of sodium battery using polymer electrolyte ;

### (1) Preparation of positive electrode slice

A. Dissolving polyvinylidene fluoride (PVdF) in N,N-2-methyl pyrrolidone with the concentration of 0.1mol/L; B. Mixing PVdF, sodium vanadium phosphate and conductive carbon black with the mass ratio of 10:80:10, and then grinding same for at least one hour; C. uniformly coating the slurry obtained in the previous step on a copper foil with the thickness of 100 µm - 120 µm; and D. tailoring according to dimension.

### (2) Preparation of negative electrode

A. Dissolving polyvinylidene fluoride (PVdF) in N,N-2-methyl pyrrolidone with the concentration of 0.1 mol/L; B. Mixing PVdF, molybdenum disulfide and conductive carbon black with the mass ratio of 10:80:10, and then grinding same for at least 1 hour; C. uniformly coating the slurry obtained in the previous step on a copper foil with the thickness of 100 µm - 120µm; and D. tailoring according to dimension.

Assembling the polymer electrolyte into a sodium battery by taking molybdenum disulfide as a negative electrode and sodium vanadium phosphate as a positive electrode, and measuring the embodiment by using an LAND battery charging and discharging instrument, as shown in Figure 3. By the test, the solid-state sodium ion full battery assembled by the solid-state polymer electrolyte exhibits high rate capability, and a discharging capacity of 103 mAh g⁻¹ under the current density of 2 A/g.

### Embodiment 4:

### Sodium ion polymer electrolyte

Dissolving 1.3 g of poly propylene carbonate and 0.25 g of sodium bis(oxalate) borate in 14 g of N,N-dimethylformamide, stirring the solution at the room temperature until the solution is in a homogeneous solution state, weighing 5 g of the solution, coating same on a polyimide non-woven film (3 cm × 3 cm), and vacuum-drying the obtained polymer electrolyte at 90°C; and tailoring according to dimension.

Testing the ionic conductivity of the prepared solid-state polymer electrolyte: clamping the electrolyte using two pieces of stainless steel, and placing same in a 2032-type battery case. The sodium ionic conductivity is measured by electrochemical impedance spectroscopy using the formula of σ=L/ARb, where L is the thickness of the electrolyte, A is the area of each stainless steel piece at room temperature, and Rb is impedance obtained by measurement. It was demonstrated that the ionic conductivity of the solid-state polymer electrolyte is 1×10⁻⁴ S/cm at 25 °C.

Testing the electrochemical window of the prepared solid-state polymer electrolyte: clamping the electrolyte using two pieces of stainless steel, and placing same in a 2032-type battery case. The electrochemical window conducts linear volt-ampere scanning measurement with an electrochemical workstation, has onset potential of 2.5 V, the maximum potential of 5.5 V, and scanning speed of 1 mV/s. The electrochemical window of the solid-state polymer electrolyte is higher than 4V.

Measurement of discharge specific capacity of the sodium battery using the polymer electrolyte:

### (1) Preparation of positive electrode

A. Dissolving polyvinylidene fluoride (PVdF) in N,N-2-methyl pyrrolidone with the concentration of 0.1mol/L; B. Mixing PVdF, sodium manganese oxide and conductive carbon black with the mass ratio of 10:80:10, and then grinding same for at least 1 hour; C. uniformly coating the slurry obtained in the previous step on a aluminum foil with the thickness of 100 µm -120 µm; and D. tailoring according to dimension.

### (2) Preparation of negative electrode

A. Dissolving polyvinylidene fluoride (PVdF) in N,N-2-methyl pyrrolidone with the concentration of 0.1 mol/L; B. Mixing PVdF, hard carbon and conductive carbon black with the mass ratio of 10:80:10, and then grinding same for at least 1 hour; C. uniformly coating the slurry obtained in the previous step on a copper foil with the thickness of 100 µm -120 µm; and D. tailoring according to dimension.

Assembling the polymer electrolyte into a sodium battery by taking hard carbon as a negative electrode and sodium manganese oxide as a positive electrode, and measuring the embodiment by using an LAND battery charge & discharge instrument.

### Embodiment 5

Adding 2 g of poly propylene carbonate and 18 g of N,N-dimethylacetamide into a 100 ml of reagent bottle, stirring for 6 hrs at normal temperature, and obtaining a homogeneous poly propylene carbonate solution. Then, adding 0.2 g of lithium bis(oxalate)borate into the homogeneous solution, stirring for 24 hrs at normal temperature, and obtaining a uniformly mixed solution. Uniformly pouring the solution on a culture dish, drying for 24 h under a 60 °C vacuum oven condition, and obtaining a poly propylene based carbonate all-solid-state polymer electrolyte by drying.

### Embodiment 6

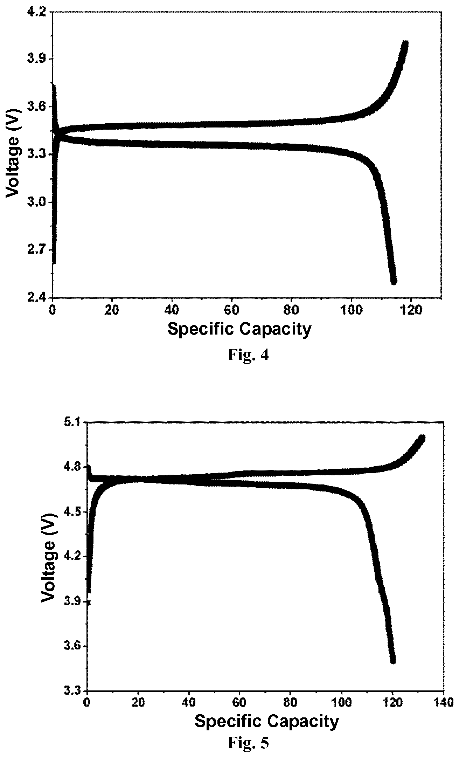

Adding 4 g of poly ethylene carbonate and 36 g of N,N-dimethylformamide into a 250 ml of reagent bottle, stirring for 8hrs at normal temperature, and obtaining a homogeneous poly ethylene carbonate solution. Then, adding 0.4 g of lithium perchlorate and 0.5 g of polyethylene oxide into the homogeneous solution, stirring for 15 hrs at normal temperature, and obtaining a uniformly mixed solution. Uniformly pouring the solution on a non-woven fabrics cellulose, drying for 1 day under a 60 °C vacuum oven condition, and obtaining a poly-ethylene-carbonate/polyethylene oxide all-solid-state polymer electrolyte by drying (see Figure 4).

### Embodiment 7

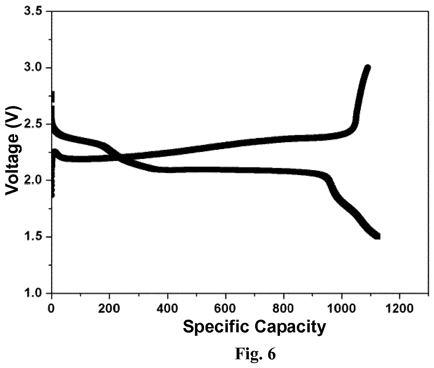

Adding 3 g of poly butylene carbonate, 0.6 g of polyethylene oxide, and 20 g of acetone into a 100ml of reagent bottle, then stirring for 6 hrs at normal temperature, and obtaining a homogeneous poly butylene carbonate solution. Then, adding 0.6g of lithium hexafluorophosphate and 0.4 g of polyacrylonitrile into the homogeneous solution, stirring for 15 hrs at normal temperature, and obtaining a uniformly mixed solution. Uniformly pouring the solution on a PET non-woven fabrics film, drying for 1 day under a 80 °C vacuum oven condition, and obtaining a poly butylene carbonate/polyacrylonitrile all-solid-state polymer electrolyte by drying (see Figure 6).

### Embodiment 8

Adding 2 g of poly propylene carbonate, 0.5 g of polyethylene oxide, and 16 g of tetrahydrofuran into a 100 ml of reagent bottle, then stirring for 6h at normal temperature, and obtaining a homogeneous poly propylene carbonate solution. Then, adding 0.2 g of lithium hexafluoroarsenate and 0.2 g of nanometer silicon dioxide into the homogeneous solution, stirring for 12 h at normal temperature, and obtaining a uniformly mixed solution. Uniformly pouring the solution on a non-woven fabrics cellulose film, drying for 1 day under a 100 °C vacuum oven condition, and obtaining an all-solid-state polymer electrolyte by drying.

### Embodiment 9

Adding 4 g of poly ethylene carbonate, 1.6 g of polyvinylidene fluoride and 36 g of acetonitrile into a 250 ml of reagent bottle, stirring for 8h at normal temperature, and obtaining a homogeneous poly ethylene carbonate solution. Then, adding 0.8 g of lithium tetrafluoroborate and 0.6 g of polymethylmethacrylate into the homogeneous solution, stirring for 5 hrs at normal temperature, and obtaining a uniformly mixed solution. Uniformly pouring the solution onto a glass fiber, drying for 1 day under a 80 °C vacuum oven condition, and obtaining a poly ethylenecarbonate all-solid-state polymer electrolyte by drying.

### Embodiment 10

Adding 3 g of poly butylene carbonate, 1.0 g of polyacrylonitrile, and 24 g of acetone into a 100 ml of reagent bottle, then stirring for 7 hrs at normal temperature, and obtaining a homogeneous poly butylene carbonate solution. Then, adding 0.5 g of lithium bis(oxalate)borate and 0.7 g of montmorillonite into the homogeneous solution, stirring for 1 day at normal temperature, and obtaining a uniformly mixed solution. Uniformly pouring the solution onto an electrostatic spinning polyimide film, drying for 1 day under a 40 °C vacuum oven condition, and obtaining a polybutylenecarbonate all-solid-state polymer electrolyte by drying.

Performance characterization od the electrolyte is as follows:
Film thickness: the thickness of the polycarbonate all-solid-state polymer electrolyte is tested by using a micrometer (with the accuracy of 0.01mm), 5 points on a sample are selected at random, and an average is taken.
nonic conductivity: clamping the electrolyte using two pieces of stainless steel, and placing same in a 2032-type battery case. The sodium ionic conductivity is measured by electrochemical impedance spectroscopy using the formula of σ=L/ARb, where L is the thickness of the electrolyte, A is the area of each stainless steel piece at room temperature, and Rb is impedance obtained by measurement.
Electrochemical window: clamping the electrolyte using two pieces of stainless steel, and placing same in a 2032-type battery case. The electrochemical window conducts linear volt-ampere scanning measurement with an electrochemical workstation, has onset potential of 2.5 V, the maximum potential of 5.5 V, and scanning speed of 1 mV/s. (See Table 1).

The obtained result is listed in Table 1. It can be seen from Table 1 that the polycarbonate all-solid-state polymer electrolyte provided by the present invention delivers high mechanical strength (≥ 10 Mpa), high ionic conductivity (2×10⁻⁵S/cm -1×10⁻³ S/cm) at room temperature, superior rate capability; wide electrochemical window (higher than 4 V), and then improved energy density.

Characterization of battery performance comprises the following steps:
(1) Preparation of positive electrode
   A. Dissolving polyvinylidene fluoride (PVdF) in N,N-2-methyl pyrrolidone with the concentration of 0.1mol/L;
   B. Mixing PVdF, positive electrode active material and conductive carbon black with the mass ratio of 10:80:10, and then grinding same for at least 1 hour;
   C. Uniformly coating the slurry obtained in the previous step on a copper foil with the thickness of 100 µm -120 µm; drying at 60 °C first, then drying under a 120 °C vacuum oven condition, continuously drying in the 120 °C vacuum oven after rolling, punching and weighing, and placing in a glove box for standby; and
   D. Tailoring according to dimension.
(2) Preparation of negative electrode
   A. Dissolving PVdF in N,N-2-methyl pyrrolidone with the concentration of 0.1 mol/L;
   B. Mixing PVdF, negative electrode active material and conductive carbon black with the mass ratio of 10:80:10, and then grinding same for at least 1 hour;
   C. Uniformly coating the slurry obtained in the previous step on a copper foil with the thickness of 100-120µm; drying at 60 °C first, the drying under a 120 °C vacuum oven condition, continuously drying in the 120 °C vacuum oven after rolling, punching and weighing, and placing in a glove box for standby; and
   D. Tailoring according to dimension;
(3) Battery assembling
(4) Characterization of charge/discharge performance of the battery

The characterization method is as follows: charge/discharge curve, rate capability and cycle performance of the all-solid-state secondary lithium battery at different temperatures was measured by using an LAND battery charging and discharging instrument. (See Figure 1 and Figure 2).

It can be seen from Figure 4 that, under the conditions of 80 °C and 15 mA g⁻¹, the chargr/discharge curve of the lithium iron phosphate/lithium metal battery assembled by the poly-propylene-carbonate all-solid-state polymer electrolyte is relatively stable, and the specific discharge capacity can reach 166 mAh g⁻¹.

It can be seen from Figure 5 that, under the conditions of 60 °C and 100 mA g⁻¹, the charge/discharge voltage of the lithium nickel manganese oxide/lithium metal battery using polyethylenecarbonate all-solid-state polymer electrolyte can reach 5V, and the specific discharge capacity can reach 120 mAh g⁻¹, thereby displaying extremely superior high voltage charging/discharging performance.

It can be seen from Figure 6 that the charging and discharging curve of the lithium-sulfur battery assembled by the poly-butylene-carbonate all-solid-state polymer electrolyte is relatively stable, and the specific discharge capacity can reach 1150 mAh g⁻¹under the conditions of 60 °C and 100mA g⁻¹,

**Table 1**

| Embodiments | Thickness (µm) | Mechanical strength (MPa) | ionic conductivity (×10⁻⁴ S/cm) | Electrochemical window (V) |
|---|---|---|---|---|
| Embodiment 5 | 50 | 25 | 3.6 | 4.1 |
| Embodiment 6 | 100 | 75 | 5 | 4.3 |
| Embodiment 7 | 200 | 55 | 1 | 4.2 |
| Embodiment 8 | 400 | 30 | 0.8 | 4.5 |
| Embodiment 9 | 600 | 48 | 8 | 4.6 |
| Embodiment 10 | 800 | 40 | 2 | 4.4 |

## Claims

1. An all-solid-state polymer electrolyte, **characterized in that** the electrolyte comprises;
a carbonic ester polymer, and
a metal salt and a porous support material;
wherein its thickness is 20 µm - 800 µm; its ionic conductivity is 1×10⁻⁵ S/cm - 1 × 10⁻³ S/cm at 25°C ; its electrochemical window is higher than 3.6 V measured placing the polymer electrolyte between two pieces of stainless steel, placing it in a 2032 type battery case, performing a linear volt-ampere scanning measurement, onset potential of 2.5V, maximum potential of 5.5V, scanning speed 1mV/s, and the metal salt is sodium salt or lithium salt.

2. The all-solid-state polymer electrolyte of claim 1, **characterized in that**
when the metal salt is a sodium salt, the sodium battery electrolyte comprises a carbonic ester polymer, a sodium salt and a porous support material; wherein the thickness is 20 µm - 600 µm; the ionic conductivity is 1×10⁻⁵ S/cm - 1×10⁻³ S/cm; the electrochemical window is higher than 3.6 V; and
when the metal salt is a lithium salt, the lithium battery electrolyte comprises a carbonic ester polymer, a lithium salt and a porous support material; wherein the thickness is 20 µm - 800 µm; the mechanical strength is 10 MPa - 80 MPa; the ionic conductivity is 2×10⁻⁵ S/cm - 1×10⁻³ S/cm at room temperature; and the electrochemical window is greater than 4 V.

3. The all-solid-state polymer electrolyte of claim 2, **characterized in that** the lithium battery electrolyte further comprises an additive.

4. The all-solid-state polymer electrolyte of claim 1, **characterized in that**
when the metal salt is a sodium salt, the sodium salt in the sodium battery electrolyte is one or more of sodium hexafluorophosphate, sodium perchlorate, sodium bis(oxalate) borate, sodium difluoro (oxalato) borate, and sodium trifluoromethanesulfonate; the mass fraction of the sodium salt in the electrolyte is 5 % - 50 %;
the carbonic ester polymer has a structure as shown in general formula 1: 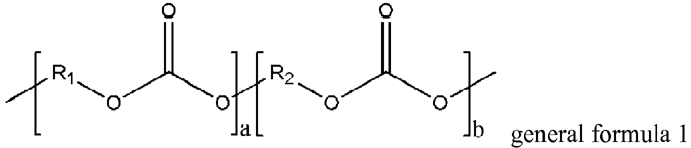 wherein the value range of a is 1-10000, and the value range of b is 1-10000;
R1 is: 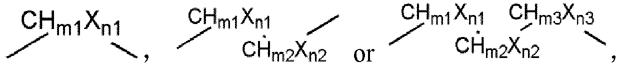 R2 is: 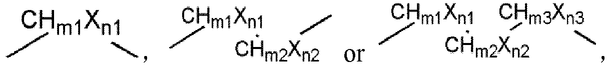 in the above-mentioned substituent group, X is fluorine, phenyl group, hydroxyl group or sodium sulfonate, wherein the value range of m1 is 0-2, the value range of n1 is 0-2, and m1 and n1 are not both 0; the value range of m2 is 0-2, the value range of n2 is 0-2, and m2 and n2 are not both 0; the value range of m3 is 0-2, the value range of n3 is 0-2, and m3 and n3 are not both 0; the mass fraction of the carbonic ester polymer in the electrolyte is 5 % - 90 %;
the porous support material is one or more of a cellulose non-woven film, a glass fiber, a polyethylene terephthalate film (PET film) and a polyimide non-woven film; and
when the metal salt is a lithium salt, the lithium salt in the lithium battery electrolyte is one or more of lithium perchlorate, lithium hexafluorophosphate, lithium bis(oxalate) borate, lithium hexafluorophosphate, lithium tetrafluoroborate, lithium trifluoromethanesulfonate, lithium bis(fluorosulfonyl)imide; the mass fraction of the lithium salt in the electrolyte is 5 % - 40 %;
the carbonic ester polymer has a structure as shown in general formula 2: 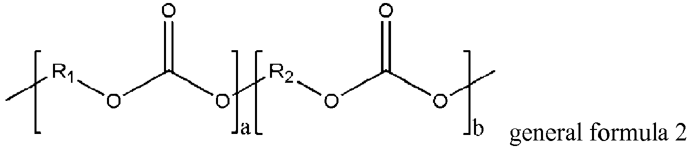 wherein the value range of a is 1-10000, and the value range of b is 1-10000;
R1 is: 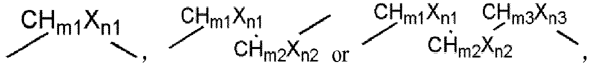 R2 is: 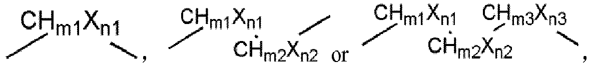 in the above-mentioned substituent group, X is fluorine, phenyl group, hydroxyl group or lithium sulfonate, where the value range of m1 is 0-2, the value range of nl is 0-2, and m1 and n1 are not both 0; the value range of m2 is 0-2, the value range of n2 is 0-2, and m2 and n2 are not both 0; the value range of m3 is 0-2, the value range of n3 is 0-2, and m3 and n3 are not both 0; the mass fraction of the carbonic ester polymer in the electrolyte is 5 % - 90 %;
the porous support material is one or more of a cellulose non-woven film, a glass fiber, a polyethylene terephthalate film (PET film) and a polyimide non-woven film; and
the additive is macromolecule or inorganic particle, wherein the macromolecule is one or more of polyethylene oxide, polyvinylidene fluoride, polyacrylonitrile, polymethylmethacrylate, polyvinyl alcohol and polyvinylidene chloride; and the inorganic particle is one or more of silicon dioxide, titanium dioxide, aluminum oxide, zirconium oxide, nickel oxide, silicon nitride, magnesium hydroxide, diatomite, montmorillonite and kaolin, and the mass fraction of the additive in the polymer electrolyte is 0.5 % - 50 %.

5. A preparation method of the all-solid-state polymer electrolyte of claim 1, **characterized in that** the preparation of the sodium battery electrolyte comprises the following steps:
(1) fetching the carbonic ester polymer and dissolving same in solvent and stirring;
(2) dissolving the sodium salt in the solution, and then sealing and stirring until a homogeneous solution is formed;
(3) uniformly pouring the solution on the porous support material, and obtaining a solid-state electrolyte of the sodium battery by drying in an environment of 60-80°C.

6. The preparation method of the all-solid-state polymer electrolyte of claim 5, **characterized in that**
the solvent is *N,N*-dimethylformamide, *N,N*-dimethylacetamide, acetone, acetonitrile, propylene carbonate, ethylene carbonate, dimethyl carbonate, diethyl carbonate, ethyl methyl carbonate, tetrahydrofuran, dimethyl sulfoxide, sulfolane, dimethyl sulfite or diethyl sulfite;
the carbonic ester polymer has a structure as shown in general formula 1: 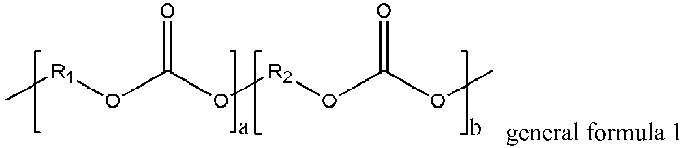 wherein the value range of a is 1-10000, and the value range of b is 1-10000;
R1 is: 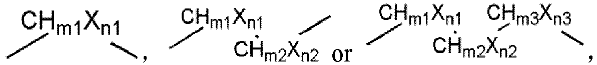 R2 is: 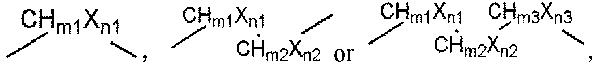 in the above-mentioned substituent group, X is fluorine, phenyl group, hydroxyl group or sodium sulfonate, where the value range of m1 is 0-2, the value range of n1 is 0-2, and m1 and n1 are not both 0; the value range of m2 is 0-2, the value range of n2 is 0-2, and m2 and n2 are not both 0; the value range of m3 is 0-2, the value range of n3 is 0-2, and m3 and n3 are not both 0; the mass fraction of the carbonic ester polymer in the electrolyte is 5%-90%;
the sodium salt is sodium hexafluorophosphate, sodium perchlorate, sodium bis(oxalate) borate, sodium difluoro (oxalato) borate or sodium trifluoromethanesulfonate; and the mass fraction of the sodium salt in the electrolyte is 5 % - 50%.

7. The preparation method of the all-solid-state polymer electrolyte of claim 1, **characterized in that** the preparation of the lithium battery electrolyte comprises the following steps:
(1) uniformly mixing a carbonic ester polymer with solvent to obtain a homogeneous carbonic ester polymer solution;
(2) adding a lithium salt in the homogeneous carbonic ester polymer solution, and continuously stirring the solution after addition to dissolve same completely;
(3) preparing a film on the porous support material using the completely dissolved carbonic ester polymer solution, and obtaining an all-solid-state polymer electrolyte of the lithium battery by vacuum drying.

8. The preparation method of the all-solid-state polymer electrolyte of claim 7, **characterized in that** the step (2) comprises: adding the lithium salt and additive in the homogeneous carbonic ester polymer solution, and continuously stirring the solution after addition to dissolve same completely.

9. The preparation method of the all-solid-state polymer electrolyte of claim 7, **characterized in that** the carbonic ester polymer has a structure as shown in general formula 2: 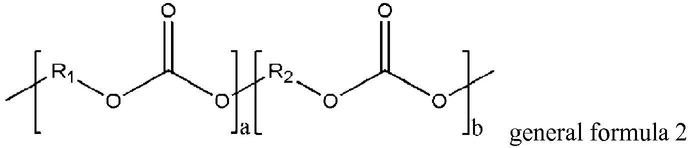 where the value range of a is 1-10000, and the value range of b is 1-10000; R1 is: 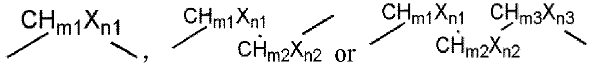 R2 is: 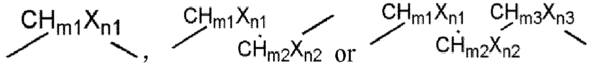 in the above-mentioned substituent group, X is fluorine, phenyl group, hydroxyl group or lithium sulfonate, where the value range of m1 is 0-2, the value range of n1 is 0-2, and m1 and n1 are not both 0; the value range of m2 is 0-2, the value range of n2 is 0-2, and m2 and n2 are not both 0; the value range of m3 is 0-2, the value range of n3 is 0-2, and m3 and n3 are not both 0; the mass fraction of the carbonic ester polymer in the electrolyte is 5 % - 90 %;
the lithium salt is one or more lithium perchlorate, lithium hexafluorophosphate, lithium bis(oxalate) borate, lithium hexafluorophosphate, lithium tetrafluoroborate, lithium trifluoromethanesulfonate, lithium bis(fluorosulfonyl)imide; the mass fraction of the lithium salt in the electrolyte is 5 % - 40 %;
the porous support material is one or more of a cellulose non-woven film, a glass fiber, a polyethylene terephthalate film (PET film) and a polyimide non-woven film;
the additive is macromolecule or inorganic particle, wherein the macromolecule is one or more of polyethylene oxide, polyvinylidene fluoride, polyacrylonitrile, polymethylmethacrylate, polyvinyl alcohol and polyvinylidene chloride; the inorganic particle is one or more of silicon dioxide, titanium dioxide, aluminium oxide, zirconium oxide, nickel oxide, silicon nitride, magnesium hydroxide, diatomite, montmorillonite and kaolin; and the mass fraction of the additive in the polymer electrolyte is 0.5 % - 50 %; and
the solvent is one or more of acetonitrile, dimethyl sulfoxide, sulfolane, dimethyl sulfite, diethyl sulfite, acetone, tetrahydrofuran, trichloromethane, ethyl acetate, *N,N*-dimethylformamide and *N,N*-dimethylacetamide.

10. Use of the all-solid-state polymer electrolyte of claim 1, in the preparation of
a solid-state sodium battery wherein the metal salt is a sodium salt; and
an all-solid-state secondary lithium battery wherein the metal salt is a lithium salt.

11. A solid-state sodium battery, comprising a positive electrode, a negative electrode and an electrolyte located between the positive electrode and the negative electrode, **characterized in that** the electrolyte is a solid polymer electrolyte; the electrolyte comprises a carbonic ester polymer, a sodium salt and a support material thereof; wherein its thickness is 20 µm - 600 µm; its ionic conductivity is 1×10⁻⁵ S/cm - 1×10⁻³ S/cm; and its electrochemical window is higher than 3.6 V.

12. The solid-state sodium battery of claim 11, **characterized in that** sodium vanadium phosphate, sodium iron sulfate, sodium ion fluorophosphate, sodium vanadium fluorophosphate, sodium iron fluorophosphate, sodium manganese oxide or sodium cobalt oxide is used as the positive electrode active material; and
metallic sodium, hard carbon, molybdenum disulfide, sodium titanium oxide, nickel cobalt oxide, antimony oxide, antimony carbon composite material, tin antimony composite material, para-phthalic sodium, lithium titanium oxide or sodium lithium titanium oxide is used as the negative electrode active material.

13. A preparation method of the solid-state sodium battery, **characterized in that** the preparation comprises the steps of:
separating a positive electrode slice from a negative electrode slice with the electrolyte of any one of claims 1 to 4, placing same in a metallic shell, sealing the metallic shell, and then obtaining a solid-state sodium battery; and
assembling the solid-state sodium battery into a button type or soft package square battery.

14. An all-solid-state secondary lithium battery, comprising a positive electrode, a negative electrode and an electrolyte located between the positive electrode and the negative electrode, and **characterized in that** the electrolyte is a polycarbonate all-solid-state polymer electrolyte, wherein
the positive electrode active material is one of lithium cobalt oxide, lithium iron phosphate, lithium manganese phosphate, lithium manganate, lithium nickel manganese oxide, ternary material, sulphur, sulphide compound, lithium iron sulfate, lithium ion fluorophosphate, lithium vanadium fluorophosphate, lithium iron fluorophosphate and lithium manganese oxide; and
the negative electrode active material is one of lithium metal, lithium metal alloy, graphite, hard carbon, molybdenum disulfide, lithium titanate, graphene, antimony oxide, antimony carbon composite material, tin antimony composite material and lithium titanium oxide.

15. A preparation method of an all-solid-state secondary lithium battery, **characterized in that** the method comprises the step of separating a positive electrode slice from a negative electrode slice with the electrolyte of any one of claims 1 to 4, and then sealing to obtain an all-solid-state secondary lithium battery.

## Patentansprüche

1. Festkörper-Polymerelektrolyt, **dadurch gekennzeichnet, dass** der Elektrolyt Folgendes umfasst:
ein Kohlensäureester-Polymer und
ein Metallsalz und ein poröses Trägermaterial;
wobei seine Dicke 20 µm bis 800 µm beträgt; seine lonenleitfähigkeit bei 25 °C 1 x 10⁻⁵ S/cm bis 1 x10⁻³ S/cm beträgt; sein elektrochemisches Fenster größer als 3,6 V, gemessen durch Anordnen des Polymerelektrolyts zwischen zwei Edelstahlteilen, Anordnen in einem Batteriegehäuse vom 2032-Typ, Durchführen einer linearen Volt-Ampere-Scanmessung mit einem Anfangspotenzial von 2,5 V, einem maximalen Potenzial von 5,5 V und einer Scangeschwindigkeit von 1 mV/s, ist; und wobei das Metallsalz ein Natriumsalz oder Lithiumsalz ist.

2. Festkörper-Polymerelektrolyt nach Anspruch 1, **dadurch gekennzeichnet, dass**
wenn das Metallsalz ein Natriumsalz ist, der Natriumbatterieelektrolyt ein Kohlensäureester-Polymer, ein Natriumsalz und ein poröses Trägermatieral umfasst; wobei die Dicke 20 µm bis 600 µm beträgt; die lonenleitfähigkeit bei 25 °C 1 x 10⁻⁵ S/cm bis 1 x10⁻³ S/cm beträgt; das elektrochemische Fenster größer als 3,6 V ist; und
wenn das Metallsalz ein Lithiumsalz ist, der Lithiumbatterieelektrolyt ein Kohlensäureester-Polymer, ein Lithiumsalz und ein poröses Trägermatieral umfasst; wobei die Dicke 20 µm bis 800 µm beträgt; die mechanische Festigkeit 10 MPa bis 80 MPa beträgt; die lonenleitfähigkeit bei Raumtemperatur 1 x 10⁻⁵ S/cm bis 1 x10⁻³ S/cm beträgt und das elektrochemische Fenster größer als 4 V ist.

3. Festkörper-Polymerelektrolyt nach Anspruch 2, **dadurch gekennzeichnet, dass** der Lithiumbatterieelektrolyt außerdem ein Additiv umfasst.

4. Festkörper-Polymerelektrolyt nach Anspruch 1, **dadurch gekennzeichnet, dass**
wenn das Metallsalz ein Natriumsalz ist, das Natriumsalz in dem Natriumbatterieelektrolyt eines oder mehrere von Natriumhexafluorophosphat, Natriumperchlorat, Natrium-bis(oxalat)borat, Natriumdifluor(oxalat)borat und Natriumtrifluormethansulfonat ist, wobei der Massenanteil des Natriumsalzes in dem Elektrolyten 5 % bis 50 % beträgt;
das Kohlensäureester-Polymer die in der allgemeinen Formel 1 dargestellte Struktur aufweist: 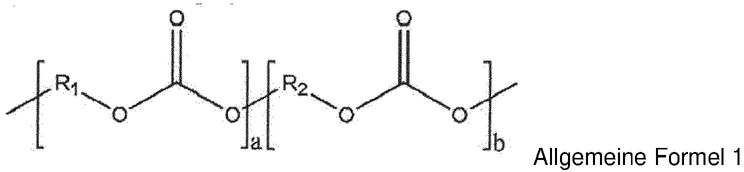 worin der Wert von a im Bereich von 1 bis 10.000 liegt und der Wert von b im Bereich von 1 bis 10.000 liegt;
R₁ 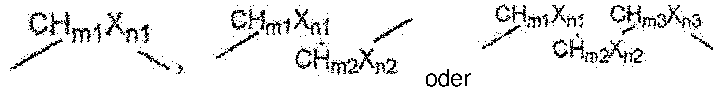 ist;
R₂ 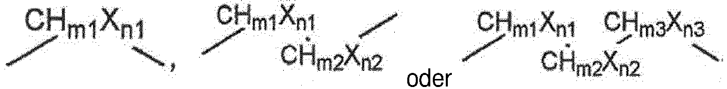 ist;
in der oben erwähnten Substituentengruppe X Fluor, eine Phenylgruppe, eine Hydroxylgruppe oder Natriumsulfonat ist, wobei der Wert von m1 im Bereich von 0 bis 2 liegt, der Wert von n1 im Bereich von 0 bis 2 liegt und m1 und n1 nicht beide 0 sind; der Wert von m2 im Bereich von 0 bis 2 liegt, der Wert von n2 im Bereich von 0 bis 2 liegt und m2 und n2 nicht beide 0 sind; der Wert von m3 im Bereich von 0 bis 2 liegt, der Wert von n3 im Bereich von 0 bis 2 liegt und m3 und n3 nicht beide 0 sind; der Massenanteil des Kohlensäureester-Polymers in dem Elektrolyten 5 % bis 90 % beträgt;
das poröse Trägermaterial eines oder mehrere aus einem Cellulosevliesfilm, einer Glasfaser, einem Polyethylenterephthalatfilm (PET-Film) und einem Polyimidvliesfilm ist; und
wenn das Metallsalz ein Lithiumsalz ist, das Lithiumsalz in dem Lithiumbatterieelektrolyt eines oder mehrere aus Lithiumperchlorat, Lithiumhexafluorophosphat, Lithium-bis(oxalat)borat, Lithiumhexafluorophosphat, Lithiumtetrafluorborat, Lithiumtrifluormethansulfonat und Lithiumbis(fluorsulfonyl)imid ist; und der Massenanteil des Lithiumsalzes in dem Elektrolyten 5 % bis 40 % beträgt;
das Kohlensäureester-Polymer die in der allgemeinen Formel 2 dargestellte Struktur aufweist: 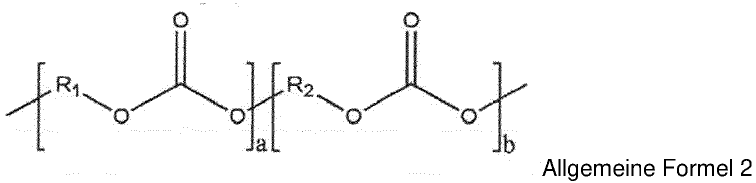 worin der Wert von a im Bereich von 1 bis 10.000 liegt und der Wert von b im Bereich von 1 bis 10.000 liegt;
R₁ 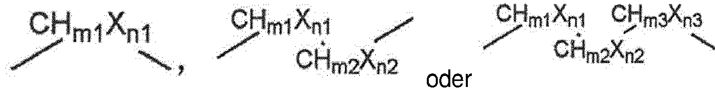 ist;
R₂ 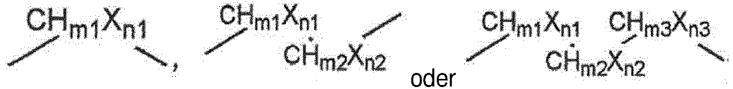 ist;
in der oben erwähnten Substituentengruppe X Fluor, eine Phenylgruppe, eine Hydroxylgruppe oder Natriumsulfonat ist, wobei der Wert von m1 im Bereich von 0 bis 2 liegt, der Wert von n1 im Bereich von 0 bis 2 liegt und m1 und n1 nicht beide 0 sind; der Wert von m2 im Bereich von 0 bis 2 liegt, der Wert von n2 im Bereich von 0 bis 2 liegt und m2 und n2 nicht beide 0 sind; der Wert von m3 im Bereich von 0 bis 2 liegt, der Wert von n3 im Bereich von 0 bis 2 liegt und m3 und n3 nicht beide 0 sind; der Massenanteil des Kohlensäureester-Polymers in dem Elektrolyten 5 % bis 90 % beträgt;
das poröse Trägermaterial eines oder mehrere aus einem Cellulosevliesfilm, einer Glasfaser, einem Polyethylenterephthalatfilm (PET-Film) und einem Polyimidvliesfilm ist; und
das Additiv ein Makromolekül oder ein anorganisches Teilchen ist, wobei das Makromolekül eines oder mehrere von Polyethylenoxid, Polyvinylidenfluorid, Polyacrylnitril, Polymethylmethacrylat, Polyvinylalkohol und Polyvinylidenchlorid ist; und das anorganische Teilchen eines oder mehrere von Siliciumdioxid, Titandioxid, Aluminiumoxid, Zirkoniumoxid, Nickeloxid, Siliciumnitrid, Magnesiumhydroxid, Diatomit, Montmorillonit und Kaolin ist und der Massenanteil des Additivs in dem Polymerelektrolyten 0,5 % bis 50 % beträgt.

5. Herstellungsverfahren für einen Festkörper-Polymerelektrolyten nach Anspruch 1, **dadurch gekennzeichnet, dass** die Herstellung des Natriumbatterieelektrolyten folgende Schritte umfasst:
(1) das Holen des Kohlensäureester-Polymers und das Lösen desselben in einem Lösungsmittel sowie Rühren;
(2) das Lösen des Natriumsalzes in der Lösung und das anschließende dichte Verschließen und Rühren, bis sich eine homogene Lösung gebildet hat; und
(3) das gleichmäßige Gießen der Lösung auf das poröse Trägermaterial und das Erhalten eines Festkörperelektrolyten der Natriumbatterie durch Trocknen in einer Umgebung mit 60 °C bis 80 °C.

6. Herstellungsverfahren für einen Festkörper-Polymerelektrolyten nach Anspruch 5, **dadurch gekennzeichnet, dass**
das Lösungsmittel N,N-Dimethylformamid, N,N-Dimethylacetamid, Aceton, Acetonitril, Propylencarbonat, Ethylencarbonat, Dimethylcarbonat, Diethylcarbonat, Ethylmethylcarbonat, Tetrahydrofuran, Dimethylsulfoxid, Sulfolan, Dimethylsulfit oder Diethylsulfit ist;
das Kohlensäureester-Polymer die in der allgemeinen Formel 1 dargestellte Struktur aufweist: 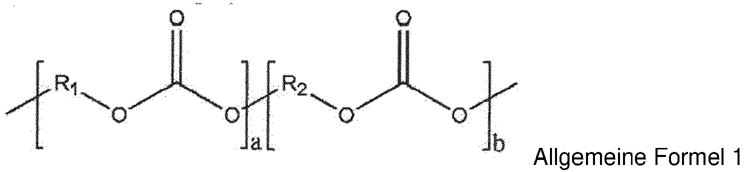 worin der Wert von a im Bereich von 1 bis 10.000 liegt und der Wert von b im Bereich von 1 bis 10.000 liegt;
R₁ 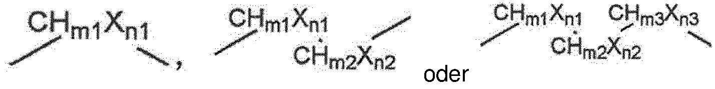 ist;
R₂ 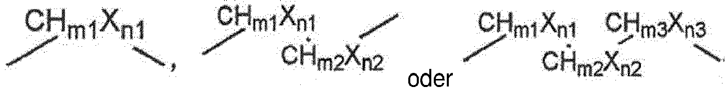 ist;
in der oben erwähnten Substituentengruppe X Fluor, eine Phenylgruppe, eine Hydroxylgruppe oder Natriumsulfonat ist, wobei der Wert von m1 im Bereich von 0 bis 2 liegt, der Wert von n1 im Bereich von 0 bis 2 liegt und m1 und n1 nicht beide 0 sind; der Wert von m2 im Bereich von 0 bis 2 liegt, der Wert von n2 im Bereich von 0 bis 2 liegt und m2 und n2 nicht beide 0 sind; der Wert von m3 im Bereich von 0 bis 2 liegt, der Wert von n3 im Bereich von 0 bis 2 liegt und m3 und n3 nicht beide 0 sind; der Massenanteil des Kohlensäureester-Polymers in dem Elektrolyten 5 % bis 90 % beträgt;
das Natriumsalz Natriumhexafluorophosphat, Natriumperchlorat, Natrium-bis(oxalat)borat, Natriumdifluor(oxalato)borat oder Natriumtrifluormethansulfonat ist und der Massenanteil des Natriumsalzes in dem Elektrolyten 5 % bis 50 % beträgt.

7. Herstellungsverfahren für einen Festkörper-Polymerelektrolyten nach Anspruch 1, **dadurch gekennzeichnet, dass** die Herstellung des Natriumbatterieelektrolyten folgende Schritte umfasst:
(1) das gleichmäßige Vermischen eines Kohlensäureester-Polymers mit einem Lösungsmittel zum Erhalt einer homogenen Kohlensäureester-Polymer-Lösung;
(2) das Zusetzen eines Lithiumsalzes in die homogene Kohlensäureester-Polymer-Lösung und das kontinuierliche Rühren der Lösung nach dem Zusetzen, um es vollständig zu lösen;
(3) das Herstellen eines Films auf dem porösen Trägermaterial unter Verwendung der vollständig gelösten Kohlensäureester-Polymer-Lösung und das Erhalten eines Festkörper-Polymerelektrolyten der Lithiumbatterie durch Vakuumtrocknen.

8. Herstellungsverfahren für einen Festkörper-Polymerelektrolyten nach Anspruch 7, **dadurch gekennzeichnet, dass** Schritt (2) Folgendes umfasst: das Zusetzen des Lithiumsalzes und eines Additivs in die homogene Kohlensäureester-Polymer-Lösung und das kontinuierliche Rühren der Lösung nach dem Zusetzen, um es vollständig zu lösen.

9. Herstellungsverfahren für einen Festkörper-Polymerelektrolyten nach Anspruch 7, **dadurch gekennzeichnet, dass** das Kohlensäureester-Polymer die in der allgemeinen Formel 2 dargestellte Struktur aufweist: 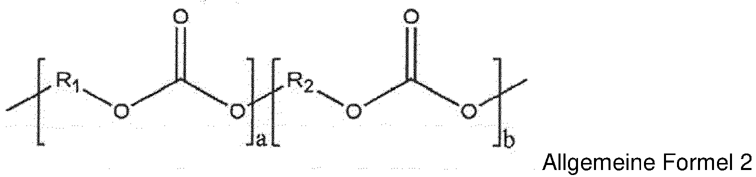 worin der Wert von a im Bereich von 1 bis 10.000 liegt und der Wert von b im Bereich von 1 bis 10.000 liegt;
R₁ 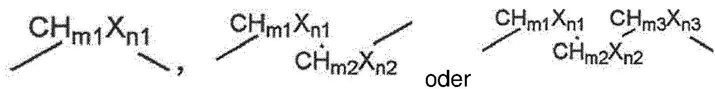 ist;
R₂ 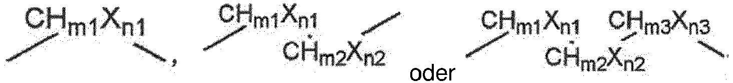 ist;
in der oben erwähnten Substituentengruppe X Fluor, eine Phenylgruppe, eine Hydroxylgruppe oder Natriumsulfonat ist, wobei der Wert von m1 im Bereich von 0 bis 2 liegt, der Wert von n1 im Bereich von 0 bis 2 liegt und m1 und n1 nicht beide 0 sind; der Wert von m2 im Bereich von 0 bis 2 liegt, der Wert von n2 im Bereich von 0 bis 2 liegt und m2 und n2 nicht beide 0 sind; der Wert von m3 im Bereich von 0 bis 2 liegt, der Wert von n3 im Bereich von 0 bis 2 liegt und m3 und n3 nicht beide 0 sind; der Massenanteil des Kohlensäureester-Polymers in dem Elektrolyten 5 % bis 90 % beträgt;
das poröse Trägermaterial eines oder mehrere aus einem Cellulosevliesfilm, einer Glasfaser, einem Polyethylenterephthalatfilm (PET-Film) und einem Polyimidvliesfilm ist; und
das Additiv ein Makromolekül oder ein anorganisches Teilchen ist, wobei das Makromolekül eines oder mehrere von Polyethylenoxid, Polyvinylidenfluorid, Polyacrylnitril, Polymethylmethacrylat, Polyvinylalkohol und Polyvinylidenchlorid ist; und das anorganische Teilchen eines oder mehrere von Siliciumdioxid, Titandioxid, Aluminiumoxid, Zirkoniumoxid, Nickeloxid, Siliciumnitrid, Magnesiumhydroxid, Diatomit, Montmorillonit und Kaolin ist und der Massenanteil des Additivs in dem Polymerelektrolyten 0,5 % bis 50 % beträgt; und
das Lösungsmittel eines oder mehrere von Acetonitril, Dimethylsulfoxid, Sulfolan, Dimethylsulfit, Diethylsulfit, Aceton, Tetrahydrofuran, Trichlormethan, Ethylacetat, N,N-Dimethylformamid und N,N-Dimethylacetamid ist.

10. Verwendung eines Festkörper-Polymerelektrolyten nach Anspruch 1 zur Herstellung
einer Festkörpernatriumbatterie, worin das Metallsalz ein Natriumsalz ist; und
einer Festkörperlithiumsekundärbatterie, worin das Metallsalz ein Lithiumsalz ist.

11. Festkörpernatriumbatterie, die eine positive Elektrode, eine negative Elektrode und einen zwischen der positiven und der negativen Elektrode angeordneten Elektrolyten umfasst, **dadurch gekennzeichnet, dass** der Elektrolyt ein fester Polymerelektrolyt ist; der Elektrolyt ein Kohlensäureester-Polymer, ein Natriumsalz und ein Trägermaterial dafür umfasst; wobei seine Dicke 20 µm bis 600 µm beträgt; seine lonenleitfähigkeit bei 25 °C 1 x 10⁻⁵ S/cm bis 1 x10⁻³ S/cm beträgt; und sein elektrochemisches Fenster größer als 3,6 V ist.

12. Festkörpernatriumbatterie nach Anspruch 11, **dadurch gekennzeichnet, dass** Natriumvanadiumphosphat, Natriumeisensulfat, Natriumeisenfluorophosphat, Natriumvanadiumfluorophosphat, Natriumeisenfluorophosphat, Natriummanganoxid oder Natriumcobaltoxid als aktives Material für die positive Elektrode verwendet wird; und
metallisches Natrium, Hartkohlenstoff, Molybdändisulfid, Natriumtitanoxid, Nickelcobaltoxid, Antimonoxid, Antimon-Kohlenstoff-Verbundmaterial, Zinn-Antimon-Verbundmaterial, Terephthalsäurenatriumsalz, Lithiumtitanoxid oder Natriumlithiumtitanoxid als aktives Material für die negative Elektrode verwendet wird.

13. Herstellungsverfahren für eine Festkörpernatriumbatterie, **dadurch gekennzeichnet, dass** die Herstellung folgende Schritte umfasst:
das Trennen einer positiven Elektrodenscheibe von einer negativen Elektrodenscheibe unter Verwendung eines Elektrolyten nach einem der Ansprüche 1 bis 4, wobei derselbe in einer Metallhülle angeordnet wird, die Metallhülle dicht verschlossen und anschließend die Festkörpernatriumbatterie erhalten wird; und
das Einbauen der Festkörpernatriumbatterie in eine Knopfbatterie oder in eine quadratische Batterienweichpackung.

14. Festkörperlithiumbatterie, die Folgendes umfasst: eine positive Elektrode, eine negative Elektrode und einen zwischen der positiven und der negativen Elektrode angeordneten Elektrolyten umfasst, **dadurch gekennzeichnet, dass** der Elektrolyt ein Festkörper-Polycarbonat-Polymerelektrolyt ist, wobei
das aktive Material der positiven Elektrode eines aus Lithiumcobaltoxid, Lithiumeisenphosphat, Lithiummanganphosphat, Lithiummanganat, Lithiumnickelmanganoxid, ternärem Material, Schwefel, einer Sulfidverbindung, Lithiumeisensulfat, Lithiumeisenfluorophosphat, Lithiumvanadiumfluorophosphat, Lithiumeisenfluorophosphat und Lithiummanganoxid ist; und
das aktive Material der negativen Elektrode eines aus metallischem Lithium, einer Legierung von metallischem Lithium, Graphit, Hartkohlenstoff, Molybdändislufid, Lithiumtitanat, Graphen, Antimonoxid, Antimon-Kohlenstoff-Verbundmaterial, Zinn-Antimon-Verbundmaterial und Lithiumtitanoxid ist.

15. Herstellungsverfahren einer Festkörper-Lithiumsekundärbatterie, **dadurch gekennzeichnet, dass** das Verfahren den Schritt des Trennens einer positiven Elektrodenscheibe von einer negativen Elektrodenschreibe unter Verwendung eines Elektrolyten nach einem der Ansprüche 1 bis 4 und das anschließende dichte Verschließen umfasst, um eine Festkörper-Lithiumsekundärbatterie zu erhalten.

## Revendications

1. Électrolyte de polymère tout solide, **caractérisé en ce que** l'électrolyte comprend ;
un polymère d'ester carbonique, et
un sel de métal et un matériau de support poreux ;
dans lequel son épaisseur est de 20 µm à 800 µm ; sa conductivité ionique est de 1 × 10⁻⁵ S/cm à 1 × 10⁻³ S/cm à 25 °C ;
sa fenêtre électrochimique est supérieure à 3,6 V mesurée par placement de l'électrolyte de polymère entre deux pièces d'acier inoxydable, placement de celui-ci dans un boîtier de batterie de type 2032, conduite d'une mesure de balayage volt-ampère linéaire, potentiel initial de 2,5 V, potentiel maximal de 5,5 V, vitesse de balayage de 1 mV/s, et le sel de métal est un sel de sodium ou un sel de lithium.

2. Electrolyte de polymère tout solide selon la revendication 1, **caractérisé en ce que**
lorsque le sel de métal est un sel de sodium, l'électrolyte de batterie au sodium comprend un polymère d'ester carbonique, un sel de sodium et un matériau de support poreux ; dans lequel l'épaisseur est de 20 µm à 600 µm ; la conductivité ionique est de 1 × 10⁻⁵ S/cm à 1 × 10⁻³ S/cm ; la fenêtre électrochimique est supérieure à 3,6 V ; et
lorsque le sel de métal est un sel de lithium, l'électrolyte de batterie au lithium comprend un polymère d'ester carbonique, un sel de lithium et un matériau de support poreux ; dans lequel l'épaisseur est de 20 µm à 800 µm ; la résistance mécanique est de 10 MPa à 80 MPa ; la conductivité ionique est de 2 × 10⁻⁵ S/cm à 1 × 10⁻³ S/cm à température ambiante ; et la fenêtre électrochimique est supérieure à 4 V.

3. Électrolyte de polymère tout solide selon la revendication 2, **caractérisé en ce que** l'électrolyte de batterie au lithium comprend en outre un additif.

4. Électrolyte de polymère tout solide selon la revendication 1, **caractérisé en ce que**
lorsque le sel de métal est un sel de sodium, le sel de sodium dans l'électrolyte de batterie au sodium est l'un ou plusieurs parmi l'hexafluorophosphate de sodium, le perchlorate de sodium, le bis(oxalato)borate de sodium, le difluoro(oxalato)borate de sodium et le trifluorométhanesulfonate de sodium ; et la fraction en masse du sel de sodium dans l'électrolyte est de 5 % à 50 %
le polymère d'ester carbonique a une structure telle que décrite dans la formule générale 1 : 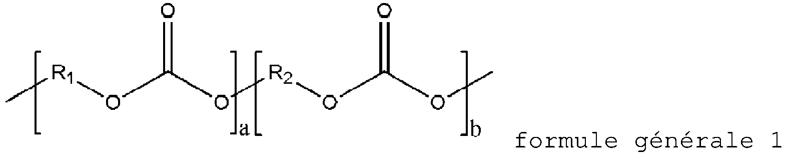 dans laquelle la plage de valeur de a est 1 à 10 000, et la plage de valeur de b est 1 à 10 000 ;
R1 est : 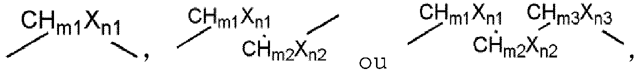 R2 est : 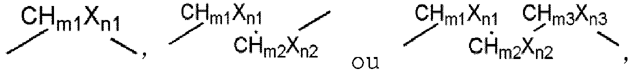 dans le groupe substituant mentionné ci-dessus, X est fluor, un groupe phényle, un groupe hydroxyle ou sulfonate de sodium, dans lequel la plage de valeur de m1 est 0 à 2, la plage de valeur de n1 est 0 à 2, et m1 et n1 ne sont pas tous deux 0 ; la plage de valeur de m2 est 0 à 2, la plage de valeur de n2 est 0 à 2, et m2 et n2 ne sont pas tous deux 0 ; la plage de valeur de m3 est 0 à 2, la plage de valeur de n3 est 0 à 2, et m3 et n3 ne sont pas tous deux 0 ; la fraction en masse du polymère d'ester carbonique dans l'électrolyte est 5 % à 90 % ;
le matériau de support poreux est l'un ou plusieurs parmi un film non-tissé de cellulose, une fibre de verre, un film de poly(téréphtalate d'éthylène) (film de PET) et un film non-tissé de polyimide ; et
lorsque le sel de métal est un sel de lithium, le sel de lithium dans l'électrolyte de batterie au lithium est l'un ou plusieurs parmi le perchlorate de lithium, l'hexafluorophosphate de lithium, le bis(oxalato)borate de lithium, l'hexafluorophosphate de lithium, le tétrafluoroborate de lithium, le trifluorométhanesulfonate de lithium, le bis(fluorosulfonyl)imide de lithium ; la fraction en masse du sel de lithium dans l'électrolyte est de 5 % à 40 % ;
le polymère d'ester carbonique a une structure telle que décrite dans la formule générale 2 : 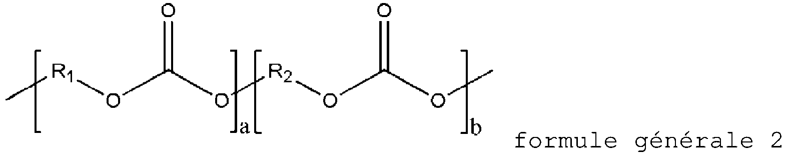 dans laquelle la plage de valeur de a est 1 à 10 000, et la plage de valeur de b est 1 à 10 000 ;
R1 est : 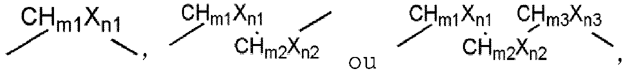 R2 est : 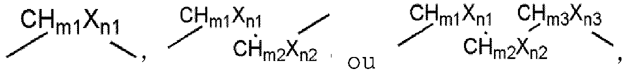 dans le groupe substituant mentionné ci-dessus, X est fluor, un groupe phényle, un groupe hydroxyle ou le sulfonate de lithium, où la plage de valeur de m1 est 0 à 2, la plage de valeur de n1 est 0 à 2, et m1 et n1 ne sont pas tous deux 0 ; la plage de valeur de m2 est 0 à 2, la plage de valeur de n2 est 0 à 2, et m2 et n2 ne sont pas tous deux 0 ; la plage de valeur de m3 est 0 à 2, la plage de valeur de n3 est 0 à 2, et m3 et n3 ne sont pas tous deux 0 ; la fraction en masse du polymère d'ester carbonique dans l'électrolyte est de 5 % à 90 % ;
le matériau de support poreux est l'un ou plusieurs parmi un film non-tissé de cellulose, une fibre de verre, un film de poly(téréphtalate d'éthylène) (film de PET) et un film non-tissé de polyimide ; et
l'additif est une macromolécule ou une particule inorganique, où la macromolécule est l'un ou plusieurs parmi le poly(oxyde d'éthylène), le poly(fluorure de vinylidène), le polyacrylonitrile, le poly(méthacrylate de méthyle), l'alcool polyvinylique et le poly(chlorure de vinylidène) ; et la particule inorganique est l'un ou plusieurs parmi le dioxyde de silicium, le dioxyde de titane, l'oxyde d'aluminium, l'oxyde de zirconium, l'oxyde de nickel, le nitrure de silicium, l'hydroxyde de magnésium, la diatomite, la montmorillonite et le kaolin, et la fraction en masse de l'additif dans l'électrolyte de polymère est de 0,5 % à 50 %.

5. Procédé de préparation de l'électrolyte de polymère tout solide selon la revendication 1, **caractérisé en ce que** la préparation de l'électrolyte de batterie au sodium comprend les étapes suivantes :
(1) fourniture du polymère d'ester carbonique et dissolution de celui-ci dans un solvant et agitation ;
(2) dissolution du sel de sodium dans la solution, puis scellement et agitation jusqu'à ce qu'une solution homogène soit formée ;
(3) versement uniforme de la solution sur le matériau de support poreux, et obtention d'un électrolyte tout solide de la batterie au sodium par séchage dans un environnement de 60 à 80 °C.

6. Procédé de préparation de l'électrolyte de polymère tout solide selon la revendication 5, **caractérisé en ce que**
le solvant est le N,N-diméthylformamide, le *N,N-*diméthylacétamide, l'acétone, l'acétonitrile, le carbonate de propylène, le carbonate d'éthylène, le carbonate de diméthyle, le carbonate de diéthyle, le carbonate d'éthylméthyle, le tétrahydrofurane, le diméthylsulfoxyde, le sulfolane, le sulfite de diméthyle ou le sulfite de diéthyle ;
le polymère d'ester carbonique a une structure telle que décrite dans la formule générale 1 : 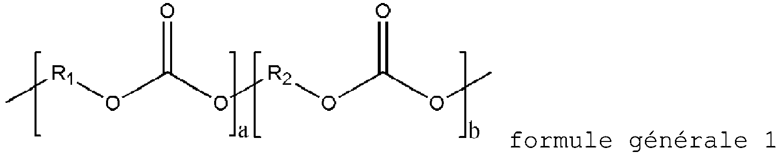 dans laquelle la plage de valeur de a est 1 à 10 000, et la plage de valeur de b est 1 à 10 000 ;
R1 est : 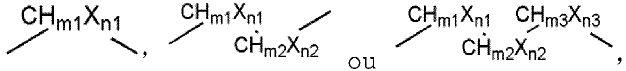 R2 est : 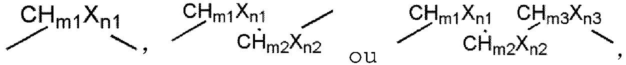 dans le groupe substituant mentionné ci-dessus, X est fluor, un groupe phényle, un groupe hydroxyle ou sulfonate de sodium, où la plage de valeur de m1 est 0 à 2, la plage de valeur de n1 est 0 à 2, et m1 et n1 ne sont pas tous deux 0 ; la plage de valeur de m2 est 0 à 2, la plage de valeur de n2 est 0 à 2, et m2 et n2 ne sont pas tous deux 0 ; la plage de valeur de m3 est 0 à 2, la plage de valeur de n3 est 0 à 2, et m3 et n3 ne sont pas tous deux 0 ; la fraction en masse du polymère d'ester carbonique dans l'électrolyte est 5 % à 90 % ;
le sel de sodium est l'hexafluorophosphate de sodium, le perchlorate de sodium, le bis(oxalato)borate de sodium, le difluoro(oxalato)borate de sodium ou le trifluorométhanesulfonate de sodium ; et la fraction en masse du sel de sodium dans l'électrolyte est de 5 % à 50 %.

7. Procédé de préparation de l'électrolyte de polymère tout solide selon la revendication 1, **caractérisé en ce que** la préparation de l'électrolyte de batterie au lithium comprend les étapes suivantes :
(1) mélange uniforme d'un polymère d'ester carbonique avec un solvant pour obtenir une solution homogène de polymère d'ester carbonique ;
(2) ajout d'un sel de lithium dans la solution homogène de polymère d'ester carbonique, et agitation continue de la solution après l'ajout pour dissoudre complètement celui-ci ;
(3) préparation d'un film sur le matériau de support poreux au moyen de la solution de polymère d'ester carbonique complètement dissous, et obtention d'un électrolyte de polymère tout solide de la batterie au lithium par séchage sous vide.

8. Procédé de préparation de l'électrolyte de polymère tout solide selon la revendication 7, **caractérisé en ce que** l'étape (2) comprend : l'ajout du sel de lithium et de l'additif dans la solution homogène de polymère d'ester carbonique, et l'agitation continue de la solution après l'ajout pour dissoudre complètement celui-ci.

9. Procédé de préparation de l'électrolyte de polymère tout solide selon la revendication 7, **caractérisé en ce que** le polymère d'ester carbonique a une structure telle que décrite dans la formule générale 2 : 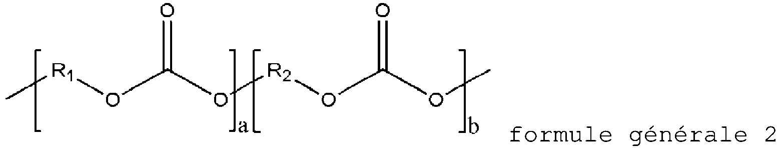 où la plage de valeur de a est 1 à 10 000, et la plage de valeur de b est 1 à 10 000 ;
R1 est : 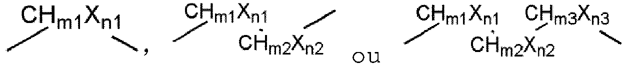 R2 est : 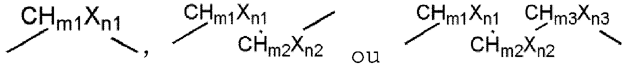 dans le groupe substituant mentionné ci-dessus, X est fluor, un groupe phényle, un groupe hydroxyle ou le sulfonate de lithium, où la plage de valeur de m1 est 0 à 2, la plage de valeur de n1 est 0 à 2, et m1 et n1 ne sont pas tous deux 0 ; la plage de valeur de m2 est 0 à 2, la plage de valeur de n2 est 0 à 2, et m2 et n2 ne sont pas tous deux 0 ; la plage de valeur de m3 est 0 à 2, la plage de valeur de n3 est 0 à 2, et m3 et n3 ne sont pas tous deux 0 ; la fraction en masse du polymère d'ester carbonique dans l'électrolyte est de 5 % à 90 % ;
le sel de lithium est l'un ou plusieurs parmi le perchlorate de lithium, l'hexafluorophosphate de lithium, le bis(oxalato)borate de lithium, l'hexafluorophosphate de lithium, le tétrafluoroborate de lithium, le trifluorométhanesulfonate de lithium, le bis(fluorosulfonyl)imide de lithium ; la fraction en masse du sel de lithium dans l'électrolyte est de 5 % à 40 % ;
le matériau de support poreux est l'un ou plusieurs parmi un film non-tissé de cellulose, une fibre de verre, un film de poly(téréphtalate d'éthylène) (film de PET) et un film non-tissé de polyimide ;
l'additif est une macromolécule ou une particule inorganique, où la macromolécule est l'un ou plusieurs parmi le poly(oxyde d'éthylène), le poly(fluorure de vinylidène), le polyacrylonitrile, le poly(méthacrylate de méthyle), l'alcool polyvinylique et le poly(chlorure de vinylidène) ; la particule inorganique est l'un ou plusieurs parmi le dioxyde de silicium, le dioxyde de titane, l'oxyde d'aluminium, l'oxyde de zirconium, l'oxyde de nickel, le nitrure de silicium, l'hydroxyde de magnésium, la diatomite, la montmorillonite et le kaolin ; et la fraction en masse de l'additif dans l'électrolyte de polymère est de 0,5 % à 50 % ; et
le solvant est l'un ou plusieurs parmi l'acétonitrile, le diméthylsulfoxyde, le sulfolane, le sulfite de diméthyle, le sulfite de diéthyle, l'acétone, le tétrahydrofurane, le trichlorométhane, l'acétate d'éthyle, le *N,N-*diméthylformamide et le N,N-diméthylacétamide.

10. Utilisation de l'électrolyte de polymère tout solide selon la revendication 1, dans la préparation d'une batterie au sodium tout solide dans laquelle le sel de métal est un sel de sodium ; et d'une batterie au lithium rechargeable tout solide dans laquelle le sel de métal est un sel de lithium.

11. Batterie au sodium tout solide, comprenant une électrode positive, une électrode négative et un électrolyte situé entre l'électrode positive et l'électrode négative, **caractérisée en ce que** l'électrolyte est un électrolyte de polymère solide ; l'électrolyte comprend un polymère d'ester carbonique, un sel de sodium et un matériau de support de celui-ci ; dans laquelle son épaisseur est de 20 µm à 600 µm ; sa conductivité ionique est de 1 × 10⁻⁵ S/cm à 1 × 10⁻³ S/cm ; et sa fenêtre électrochimique est supérieure à 3,6 V.

12. Batterie au sodium tout solide selon la revendication 11, **caractérisée en ce que** le phosphate de sodium-vanadium, le sulfate de sodium-fer, le fluorophosphate d'ion sodium, le fluorophosphate de sodium-vanadium, le fluorophosphate de sodium-fer, l'oxyde de sodium-manganèse ou l'oxyde de sodium-cobalt est utilisé en tant que matériau actif d'électrode positive ; et
le sodium métallique, le carbone dur, le disulfure de molybdène, l'oxyde de sodium-titane, l'oxyde de nickel-cobalt, l'oxyde d'antimoine, un matériau composite d'antimoine-carbone, un matériau composite d'étain-antimoine, le sodium para-phtalique, l'oxyde de lithium-titane ou l'oxyde de sodium-lithium-titane est utilisé en tant que matériau actif d'électrode négative.

13. Procédé de préparation de la batterie au sodium tout solide, **caractérisé en ce que** la préparation comprend les étapes de :
séparation d'une tranche d'électrode positive d'une tranche d'électrode négative avec l'électrolyte selon l'une quelconque des revendications 1 à 4, placement de celle-ci dans une enveloppe métallique, scellement de l'enveloppe métallique, puis obtention d'une batterie au sodium tout solide ; et
assemblage de la batterie au sodium tout solide en batterie de type pile bouton ou carrée à boîtier souple.

14. Batterie au lithium rechargeable tout solide, comprenant une électrode positive, une électrode négative et un électrolyte situé entre l'électrode positive et l'électrode négative, et **caractérisée en ce que** l'électrolyte est un électrolyte de polymère tout solide à base de polycarbonate, dans laquelle
le matériau actif d'électrode positive est l'un parmi l'oxyde de lithium-cobalt, le phosphate de lithium-fer, le phosphate de lithium-manganèse, le manganate de lithium, l'oxyde de lithium-nickel-manganèse, un matériau ternaire, le soufre, un composé de sulfure, le sulfate de lithium-fer, le fluorophosphate d'ion lithium, le fluorophosphate de lithium-vanadium, le fluorophosphate de lithium-fer et l'oxyde de lithium-manganèse ; et
le matériau actif d'électrode négative est l'un parmi le métal de lithium, un alliage de métal de lithium, le graphite, le carbone dur, le disulfure de molybdène, le titanate de lithium, un graphène, l'oxyde d'antimoine, un matériau composite d'antimoine-carbone, un matériau composite d'étain-antimoine et l'oxyde de lithium-titane.

15. Procédé de préparation d'une batterie au lithium rechargeable tout solide, **caractérisé en ce que** le procédé comprend l'étape de séparation d'une tranche d'électrode positive d'une tranche d'électrode négative avec l'électrolyte selon l'une quelconque des revendications 1 à 4, puis scellement pour obtenir une batterie au lithium rechargeable tout solide.
